# EUROPEAN PATENT APPLICATION

(11) **EP 4 819 719 A1**
(43) Date of publication of application: **07.10.2026**
(21) Application number: 23962549.4
(22) Date of filing: 26.12.2023
(51) Int. Cl.: H04W 72/0446

(54) **COMMUNICATION METHOD AND RELATED APPARATUS**

(71) Applicant: Huawei Technologies Co., Ltd., Shenzhen, Guangdong 518129 (CN)
(72) Inventor: SHI, Juncai, Shenzhen, Guangdong 518129 (CN); GAO, Lei, Shenzhen, Guangdong 518129 (CN); CHENG, Xingqing, Shenzhen, Guangdong 518129 (CN)
(74) Representative: Pfenning, Meinig & Partner mbB
(86) International application number: PCT/CN2023/141846
(87) International publication number: WO 2025/137852

(57) **Abstract**

A communication method and a related apparatus are applied to the field of communication technologies, to enable a T node to schedule a transmission resource based on "preamble DCI" included in preamble information, so that to-be-transmitted data can be transmitted in a timely manner, thereby reducing a data transmission delay. In embodiments of this application, after successful in channel contention, a first node sends, to a second node, preamble information that carries a "preamble DCI" field. The second node may schedule a first transmission resource corresponding to a first time unit based on the "preamble DCI" field, so that the first node and the second node communicate data on the first transmission resource. This avoids a case in which the second node cannot schedule a transmission resource corresponding to the first time unit because the first node does not send scheduling information, so that the transmission resource corresponding to the first time unit can be scheduled in a timely manner, and a delay of transmitting to-be-sent data can be further reduced while fully utilizing the transmission resource.

## Description

### TECHNICAL FIELD

This application relates to the field of communication technologies, and in particular, to a communication method and a related apparatus.

### BACKGROUND

When the wireless communication system includes a plurality of communication nodes, transmission resources (including a frequency domain resource and a time domain resource) that can be used by each node needs to be determined by using a resource contention mechanism. For example, a frequency number and a channel occupancy time (channel occupancy time, COT) used for data transmission between a first node and a second node may be determined by using a resource contention mechanism. The first node and the second node perform uplink/downlink data transmission at a granularity of a time unit at a frequency number obtained through contention. Therefore, after resource contention is performed, indication information of a second time unit is further sent in a first time unit, to indicate how the first node and the second node use a resource corresponding to the second time unit. However, when there is no indication information indicating how the first node and the second node use a resource corresponding to the first time unit, the transmission resource corresponding to the first time unit cannot be used to carry data between nodes. Consequently, to-be-transmitted data needs to be transmitted in a time unit after the first time unit, resulting in a relatively high data transmission delay.

### SUMMARY

Implementations of this application provide a communication method and a related apparatus, to enable a T node to schedule a transmission resource based on "preamble DCI" included in preamble information, so that to-be-communicated data can be communicated in a timely manner, thereby reducing a data transmission delay.

**According to a first aspect,** an implementation of this application provides a communication method, and the method may be performed by a communication apparatus. The communication apparatus may be a device, or may be a chip (system) or a circuit used in the device. This is not limited in this application. The method is applied to a first node, and includes:
sending preamble information, where the preamble information indicates the first node and a second node to be synchronized, the preamble information and a first time unit are within a first channel occupancy time COT, the first time unit is used for communicating data between the first node and the second node, the preamble information includes first indication information, the first indication information includes first scheduling information, and the first scheduling information is used for scheduling a first transmission resource corresponding to the first time unit; and communicating data in the first time unit based on the first scheduling information.

In this implementation of this application, the communication method is provided. The preamble information including the first indication information is sent to the second node, so that the second node completes operations such as synchronization and resource scheduling based on the preamble information, to send to-be-sent data in a timely manner, thereby reducing a data transmission delay. The preamble information indicates the first node and the second node to be synchronized, and the preamble information and the first time unit are within the first COT. This means that the preamble information indicates the second node to communicate with the first node at a specified frequency number by using the first COT. The first indication information includes the first scheduling information, and the first scheduling information is used for scheduling the first transmission resource corresponding to the first time unit, so that after receiving the preamble information, the second node can complete synchronization with the first node based on the preamble information, schedule the first transmission resource in the first time unit, and perform data transmission in the first time unit. In this way, to-be-sent data can be sent in a timely manner by using the first time unit, thereby reducing a transmission delay of the to-be-sent data.

In addition, because the transmission resource in the first time unit is scheduled in a timely manner, a case in which a transmission resource is wasted because the transmission resource cannot be scheduled in a timely manner can be avoided.

**In a possible implementation,** the preamble information further includes second indication information, and the second indication information indicates a duration occupied by the first indication information.

In this implementation of this application, the second indication information indicates the duration (including a specific time, a quantity of symbols, or a quantity of basic time units Ts) occupied by the first indication information. For example, a value of the second indication information may represent the duration occupied by the first indication information. Specifically, the value of the second indication information being 100 may represent that the duration occupied by the first indication information is 100 µs, or the like. In this way, the second node can accurately obtain the second indication information from the preamble information based on the duration indicated by the second indication information, to avoid a case in which incomplete second indication information is obtained from the preamble information, or excessive information is obtained, causing a deviation in parsing the second indication information.

**In a possible implementation,** the value corresponding to the second indication information is a first value, the first value is different from a preset value, and the preset value represents that the preamble information does not include the first indication information.

In this implementation of this application, the value corresponding to the second indication information is the first value, and the first value may be 50. The first value is different from the preset value, and the preset value may be 0. The preset value represents that the preamble information does not include the first indication information. It may be understood as that when the value corresponding to the second indication information is the preset value, the preamble information does not include the first indication information.

Optionally, the preset value may be any value. This is not limited in this implementation of this application. For example, the preset value may be 127, 126, 1, or the like.

**In a possible implementation,** a size of the second indication information is 7 bits.

In this implementation of this application, the size of the second indication information is 7 bits, and a value range of the 7 bits may be 0 to 127. The duration occupied by the first indication information may be represented by a quantity of symbols, and a duration occupied by each symbol may be preset. In some scenarios, a maximum quantity of symbols occupied by the first indication information does not exceed 128. When the size of the second indication information is 7 bits, the quantity of symbols occupied by the first indication information can be accurately indicated, and excessive resource overheads are not generated, so that communication resources are efficiently used.

Optionally, the size of the second indication information may alternatively be 1 bit, 2 bits, 4 bits, 8 bits, 10 bits, or the like. The size of the second indication information is not limited in this implementation of this application.

**In a possible implementation,** the first indication information includes first common DCI and/or first dedicated DCI.

In this implementation of this application, both the first common DCI and the first dedicated DCI are optional, so that the first node can flexibly set content included in the first indication information based on a requirement. The first common DCI indicates a common message, for example, a broadcast message or a notification to all users (nodes) that access a specified frequency number. The first dedicated DCI indicates a dedicated message, for example, instruct a user (the second node) to perform data transmission.

**In a possible implementation,** the preamble information further includes third indication information, the third indication information indicates a duration occupied by the first common DCI, and a duration occupied by the first dedicated DCI is associated with the duration occupied by the first common DCI.

In this implementation of this application, the preamble information further includes the third indication information, and the third indication information indicates the duration occupied by the first common DCI. For example, the duration occupied by the first common DCI may be indicated in a manner of indicating the quantity of symbols occupied by the first common DCI. Specifically, two bits may be used to indicate the quantity of symbols occupied by the first common DCI. For example, "00" indicates that the first common DCI occupies four symbols, "01" indicates that the first common DCI occupies eight symbols, "10" indicates that the first common DCI occupies 12 symbols, and "11" is reserved information. With reference to the duration occupied by the first indication information that is indicated by the second indication information, the duration occupied by the first dedicated DCI may be determined. For example, the duration occupied by the first dedicated DCI is equal to the duration occupied by the first indication information minus the duration occupied by the first common DCI.

Optionally, the third indication information may be adjusted to indicate the duration occupied by the first dedicated DCI, and the duration occupied by the first common DCI may be determined based on the duration occupied by the first indication information and the duration occupied by the first dedicated DCI.

Optionally, the preamble information may further include one piece of target indication information, and the target indication information directly indicates the duration occupied by the first dedicated DCI.

**In a possible implementation,** the first dedicated DCI includes fourth indication information, and the fourth indication information indicates a transmission resource that is used to carry an acknowledgment character ACK/negative acknowledgment NACK in the first time unit.

The ACK indicates that the second node correctly receives data from the first node, and the NACK indicates that the second node incorrectly receives data from the first node.

In this implementation of this application, the fourth indication information indicates the transmission resource used to carry the ACK/NACK in the first time unit, so that the second node can feed back an ACK/NACK by using the specified transmission resource, and the first node can receive, on the specified transmission resource, the ACK/NACK fed back by the second node, thereby avoiding a phenomenon that the second node cannot feed back the ACK/NACK in a timely manner.

Optionally, a "dedicatedACK-ResourceSetConf" field may be used in a "T-node-specific control information resource pool" to indicate a transmission resource for feeding back the ACK/NACK based on a first indication.

**In a possible implementation,** the first dedicated DCI further includes fifth indication information, and the fifth indication information indicates a start location of the first indication information in the preamble information.

In this implementation of this application, the first dedicated DCI further includes the fifth indication information, and the fifth indication information indicates the start location of the first indication information in the preamble information, so that the second node can accurately locate the first indication information based on the fifth indication information, and can accurately parse the first indication information in the preamble information.

Optionally, the fifth indication information further indicates a duration occupied by the preamble DCI.

Optionally, a "preambleControlTimeResource" field may be added to the "T-node-specific control information resource pool", to indicate the start location of the first indication information in the preamble information.

**In a possible implementation,** a size of the fifth indication information is 5 bits, and the start location of the first indication information in the preamble information is twice a value of the fifth indication information.

In this implementation of this application, if the value of the fifth indication information is 10, the start location of the first indication information in the preamble information may be the 20^{th} symbol.

Optionally, the size of the fifth indication information is 7 bits, and the start location of the first indication information in the preamble information is twice a value of the first five bits in the fifth indication information. For example, if the value of the first five bits is 10, the start location of the first indication information in the preamble information may be the 20^{th} symbol. The duration occupied by the preamble DCI satisfies the following condition: Time length occupied by the preamble DCI=power (2, a value of the last two bits in the fifth indication information+1). For example, if the value of the last two bits in the fifth indication information is 3, the duration occupied by the preamble DCI may be 2^3=8 symbols.

**In a possible implementation,** the second COT preceding the first COT includes sixth indication information, the sixth indication information includes second scheduling information, and the second scheduling information is used for scheduling a second transmission resource corresponding to the first time unit.

In this implementation of this application, the second COT may be understood as a COT that is before the first COT and that is adjacent to the first COT. The second COT includes the sixth indication information, the sixth indication information includes the second scheduling information, and the second scheduling information is used for scheduling the second transmission resource corresponding to the first time unit. It is equivalent to that the second node may also schedule, based on the second scheduling information, the transmission resource corresponding to the first time unit. With reference to the foregoing description, that the first node communicates data in the first time unit based on the first scheduling information is equivalent to that the first node and the second node ignore (ignore) the second scheduling information, and schedule a transmission resource based on the first scheduling information included in the preamble information.

**In a possible implementation,** the first time unit includes seventh indication information, the seventh indication information includes third uplink scheduling information, and the third uplink scheduling information is used for scheduling a transmission resource corresponding to the first time unit.

Communicating the data in the first time unit based on the first scheduling information includes:
communicating uplink data in the first time unit based on the third uplink scheduling information.

In an implementation of this application, the first time unit includes seventh indication information, the seventh indication information includes third uplink scheduling information, the third uplink scheduling information is used for scheduling a transmission resource corresponding to the first time unit, and the transmission resource scheduled by using the third uplink scheduling information is used for uplink data transmission. It is equivalent to ignoring a transmission resource that is used for communicating uplink data and that is in the transmission resource scheduled by using the first scheduling information. In this way, the second node can schedule a transmission resource based on latest scheduling information, so that the transmission resource is more properly used for data transmission.

It may be understood that, in this implementation of this application, the third uplink scheduling information in the first time unit is used for scheduling the transmission resource corresponding to the first time unit, and it may be considered that a resource scheduling manner of "uplink co-superframe scheduling" is used.

**In a possible implementation,** the first time unit includes eighth indication information, the eighth indication information includes third downlink scheduling information, and the third downlink scheduling information is used for scheduling a transmission resource corresponding to the first time unit.

Communicating the data in the first time unit based on the first scheduling information includes: communicating downlink data in the first time unit based on the third downlink scheduling information.

In this implementation of this application, the first time unit includes the eighth indication information, the eighth indication information includes the third downlink scheduling information, the third downlink scheduling information is used for scheduling the transmission resource corresponding to the first time unit, and the transmission resource scheduled by using the third downlink scheduling information is used for communicating downlink data. It is equivalent to ignoring a transmission resource that is used for communicating downlink data and that is in the transmission resource scheduled by using the first scheduling information. In this way, the second node can schedule a transmission resource based on latest scheduling information, so that the transmission resource is more properly used for data transmission.

It may be understood that, in this implementation of this application, the third downlink scheduling information in the first time unit is used for scheduling the transmission resource corresponding to the first time unit, and it may be considered that a resource scheduling manner of "downlink co-superframe scheduling" is used.

**In a possible implementation,** when both the seventh indication information and the eighth indication information are included in the first time unit,
communicating the data in the first time unit based on the first scheduling information includes:
communicating uplink data in the first time unit based on the third uplink scheduling information; and communicating downlink data in the first time unit based on the third downlink scheduling information.

In this implementation of this application, it is equivalent to using a resource scheduling manner of "co-superframe scheduling". To be specific, indication information in the first time unit is used for scheduling transmission resources (including an uplink and a downlink) in the first time unit, so that the second node ignores the first indication information in the preamble information, and uses latest scheduling information for transmission resource scheduling. In this way, the transmission resource can be more properly used for data transmission.

**In a possible implementation,** the first time unit includes ninth indication information, the ninth indication information includes third scheduling information, the third scheduling information is used for scheduling a transmission resource corresponding to the second time unit, and the first time unit and the second time unit are within the first COT.

In this implementation of this application, the first time unit includes the ninth indication information, the ninth indication information includes the third scheduling information, the third scheduling information is used for scheduling the transmission resource corresponding to the second time unit, and the first time unit and the second time unit are within the first COT. It may be understood that, because the first time unit includes the scheduling information used for scheduling the transmission resource corresponding to the second time unit, the second time unit may be a time unit after the first time unit.

It may be understood that, in this implementation of this application, the third scheduling information in the first time unit is used for scheduling the transmission resource corresponding to the second time unit, and it may be considered as using the resource scheduling manner of "cross-superframe scheduling".

**In a possible implementation,** the ninth indication information includes second common DCI and second dedicated DCI, the second dedicated DCI includes tenth indication information, and the tenth indication information indicates a start location of the second dedicated DCI in the first time unit.

In this implementation of this application, the tenth indication information included in the second dedicated DCI indicates the start location of the second dedicated DCI in the first time unit. In this way, the second node can accurately locate the start location of the second dedicated DCI in the first time unit based on the tenth indication information, to help the second node parse the second dedicated DCI.

Optionally, a "controlTimeResource" field may be used in the "T-node-specific control information resource pool", to indicate the start location of the second dedicated DCI in the first time unit.

**In a possible implementation,** the second dedicated DCI further includes eleventh indication information, the eleventh indication information indicates a periodicity at which some messages appear, and a basic time unit of the periodicity is a superframe (1 ms). For example, a periodicity at which DCI appears is five superframes, that is, the DCI appears once every five superframes (ms).

Optionally, a "superframePeriod" field may be used in the "T-node-specific control information resource pool", to indicate a periodicity at which some messages appear, and a basic time unit of the periodicity is a superframe (1 ms).

**In a possible implementation,** the second dedicated DCI further includes twelfth indication information, and the twelfth indication information indicates an offset of some information in a periodicity. For example, the periodicity at which the DCI appears is 5 ms, and the twelfth indication information may indicate that the DCI is at the X^{th} ms of the periodicity. For example, the twelfth indication information may indicate that the DCI is at the 3^{rd} ms of the periodicity.

Optionally, a "superframeOffset" field may be used in the "T-node-specific control information resource pool". In addition, "superframeOffset" and "superframePeriod" satisfy the following relationship: mod(superframe number, superframePeriod+1)=superframeOffset. For example, when a remainder of dividing the superframe number by "superframePeriod+1" is equal to "superframeOffset", a superframe corresponding to the superframe number includes DCI.

**In a possible implementation,** the second dedicated DCI further includes thirteenth indication information, and the thirteenth indication information indicates a transmission resource used to carry an ACK/NACK in the second time unit.

In this implementation of this application, the thirteenth indication information indicates the transmission resource used to carry the ACK/NACK in the second time unit, so that the second node can feed back the ACK/NACK by using the specified transmission resource, and the first node can receive, on the specified transmission resource, the ACK/NACK fed back by the second node, thereby avoiding a phenomenon that the second node cannot feed back the ACK/NACK in a timely manner.

Optionally, a "dedicatedACK-ResourceSetConf" field may be used in the "T-node-specific control information resource pool", to indicate the transmission resource used to carry the ACK/NACK in the second time unit.

**In a possible implementation,** the second dedicated DCI further includes fourteenth indication information, and the fourteenth indication information indicates information about a resource used for ACK feedback in an ACK resource pool.

Optionally, a "dedicatedACK-ResourceCombConf" field may be used in the "T-node-specific control information resource pool", to indicate the information about the resource used for ACK feedback in the ACK resource pool.

**In a possible implementation,** the second dedicated DCI further includes fifteenth indication information, and the fifteenth indication information indicates a quantity of superframes.

Optionally, an "overHeadIndicationPeriod" field may be used in the "T-node-specific control information resource pool", to indicate the quantity of superframes.

**In a possible implementation,** the preamble information includes a first protection field, a first synchronization field, a preamble fixed-length field, a second synchronization field, the first indication information, a preamble variable-length field, and a second protection field.

A start location of the first protection field is located at a start location of the preamble information, the first synchronization field is located after the first protection field, and the preamble fixed-length field is located after the first synchronization field.

The second synchronization field, the first indication information, the preamble variable-length field, and the second protection field are included after the preamble fixed-length field, where the first indication information is located before the second protection field, and an end location of the second protection field is located at an end location of the preamble information.

In this implementation of this application, the first indication information is included after the preamble fixed-length field, and the first indication information is located before the second protection field. Therefore, the first indication information may be located at any location between the preamble fixed-length field and the second protection field. This is not limited in this implementation of this application.

**According to a second aspect,** an implementation of this application provides a communication method, and the method may be performed by a communication apparatus. The communication apparatus may be a device, or may be a chip (system) or a circuit used in the device. This is not limited in this application. The method is applied to a second node, and includes:
receiving preamble information, where the preamble information indicates a first node and the second node to be synchronized; where
the preamble information and a first time unit are within a first COT, and the first time unit is used for communicating data between the first node and the second node;
the preamble information includes first indication information, the first indication information includes first scheduling information, and the first scheduling information is used for scheduling a first transmission resource corresponding to the first time unit; and
communicating data in the first time unit based on the first scheduling information.

**In a possible implementation,** the preamble information further includes second indication information, and the second indication information indicates a duration occupied by the first indication information.

**In a possible implementation,** a value corresponding to the second indication information is a first value, the first value is different from a preset value, and the preset value represents that the preamble information does not include the first indication information.

Optionally, the preset value may be any value. This is not limited in this implementation of this application. For example, the preset value may be 127, 126, 1, or the like.

**In a possible implementation,** a size of the second indication information is 7 bits.

Optionally, the size of the second indication information may alternatively be 1 bit, 2 bits, 4 bits, 8 bits, 10 bits, or the like. The size of the second indication information is not limited in this implementation of this application.

**In a possible implementation,** the first indication information includes first common DCI and/or first dedicated DCI.

**In a possible implementation,** the preamble information further includes third indication information, the third indication information indicates a duration occupied by the first common DCI, and a duration occupied by the first dedicated DCI is associated with the duration occupied by the first common DCI.

Optionally, the third indication information may be adjusted to indicate the duration occupied by the first dedicated DCI, and the duration occupied by the first common DCI may be determined based on the duration occupied by the first indication information and the duration occupied by the first dedicated DCI.

Optionally, the preamble information may further include one piece of target indication information, and the target indication information directly indicates the duration occupied by the first dedicated DCI.

**In a possible implementation,** the first dedicated DCI includes fourth indication information, and the fourth indication information indicates a transmission resource that is used to carry an acknowledgment character ACK/negative acknowledgment NACK in the first time unit.

The ACK indicates that the second node correctly receives data from the first node, and the NACK indicates that the second node incorrectly receives data from the first node.

Optionally, a "dedicatedACK-ResourceSetConf" field may be used in a "T-node-specific control information resource pool" to indicate a transmission resource for feeding back the ACK/NACK based on a first indication.

**In a possible implementation,** the first dedicated DCI further includes fifth indication information, and the fifth indication information indicates a start location of the first indication information in the preamble information.

Optionally, the fifth indication information further indicates a duration occupied by the preamble DCI.

Optionally, a "preambleControlTimeResource" field may be added to the "T-node-specific control information resource pool", to indicate the start location of the first indication information in the preamble information.

**In a possible implementation,** a size of the fifth indication information is 5 bits, and the start location of the first indication information in the preamble information is twice a value of the fifth indication information.

In this implementation of this application, if the value of the fifth indication information is 10, the start location of the first indication information in the preamble information may be the 20^{th} symbol.

Optionally, the size of the fifth indication information is 7 bits, and the start location of the first indication information in the preamble information is twice a value of the first five bits in the fifth indication information. For example, if the value of the first five bits is 10, the start location of the first indication information in the preamble information may be the 20^{th} symbol. The duration occupied by the preamble DCI satisfies the following condition: Time length occupied by the preamble DCI=power (2, a value of the last two bits in the fifth indication information+1). For example, if the value of the last two bits in the fifth indication information is 3, the duration occupied by the preamble DCI may be 2^3=8 symbols.

**In a possible implementation,** the second COT preceding the first COT includes sixth indication information, the sixth indication information includes second scheduling information, and the second scheduling information is used for scheduling a second transmission resource corresponding to the first time unit.

**In a possible implementation,** the first time unit includes seventh indication information, the seventh indication information includes third uplink scheduling information, and the third uplink scheduling information is used for scheduling a transmission resource corresponding to the first time unit.

Communicating the data in the first time unit based on the first scheduling information includes:
communicating uplink data in the first time unit based on the third uplink scheduling information.

**In a possible implementation,** the first time unit includes eighth indication information, the eighth indication information includes third downlink scheduling information, and the third downlink scheduling information is used for scheduling a transmission resource corresponding to the first time unit.

Communicating the data in the first time unit based on the first scheduling information includes:
communicating downlink data in the first time unit based on the third downlink scheduling information.

**In a possible implementation,** when both the seventh indication information and the eighth indication information are included in the first time unit,
communicating the data in the first time unit based on the first scheduling information includes:
communicating uplink data in the first time unit based on the third uplink scheduling information; and communicating downlink data in the first time unit based on the third downlink scheduling information.

**In a possible implementation,** the first time unit includes ninth indication information, the ninth indication information includes third scheduling information, the third scheduling information is used for scheduling a transmission resource corresponding to the second time unit, and the first time unit and the second time unit are within the first COT.

**In a possible implementation,** the ninth indication information includes second common DCI and second dedicated DCI, the second dedicated DCI includes tenth indication information, and the tenth indication information indicates a start location of the second dedicated DCI in the first time unit.

Optionally, a "controlTimeResource" field may be used in the "T-node-specific control information resource pool", to indicate the start location of the second dedicated DCI in the first time unit.

**In a possible implementation,** the second dedicated DCI further includes eleventh indication information, the eleventh indication information indicates a periodicity at which some messages appear, and a basic time unit of the periodicity is a superframe (1 ms). For example, a periodicity at which DCI appears is five superframes, that is, the DCI appears once every five superframes (ms).

Optionally, a "superframePeriod" field may be used in the "T-node-specific control information resource pool", to indicate a periodicity at which some messages appear, and a basic time unit of the periodicity is a superframe (1 ms).

**In a possible implementation,** the second dedicated DCI further includes twelfth indication information, and the twelfth indication information indicates an offset of some information in a periodicity. For example, the periodicity at which the DCI appears is 5 ms, and the twelfth indication information may indicate that the DCI is at the X^{th} ms of the periodicity. For example, the twelfth indication information may indicate that the DCI is at the 3^{rd} ms of the periodicity.

Optionally, a "superframeOffset" field may be used in the "T-node-specific control information resource pool". In addition, "superframeOffset" and "superframePeriod" satisfy the following relationship: mod(superframe number, superframePeriod+1)=superframeOffset. For example, when a remainder of dividing the superframe number by "superframePeriod+1" is equal to "superframeOffset", a superframe corresponding to the superframe number includes DCI.

**In a possible implementation,** the second dedicated DCI further includes thirteenth indication information, and the thirteenth indication information indicates a transmission resource used to carry an ACK/NACK in the second time unit.

Optionally, a "dedicatedACK-ResourceSetConf" field may be used in the "T-node-specific control information resource pool", to indicate the transmission resource used to carry the ACK/NACK in the second time unit.

**In a possible implementation,** the second dedicated DCI further includes fourteenth indication information, and the fourteenth indication information indicates information about a resource used for ACK feedback in an ACK resource pool.

Optionally, a "dedicatedACK-ResourceCombConf" field may be used in the "T-node-specific control information resource pool", to indicate the information about the resource used for ACK feedback in the ACK resource pool.

**In a possible implementation,** the second dedicated DCI further includes fifteenth indication information, and the fifteenth indication information indicates a quantity of superframes.

Optionally, an "overHeadIndicationPeriod" field may be used in the "T-node-specific control information resource pool", to indicate the quantity of superframes.

**In a possible implementation,** the preamble information includes a first protection field, a first synchronization field, a preamble fixed-length field, a second synchronization field, the first indication information, a preamble variable-length field, and a second protection field.

A start location of the first protection field is located at a start location of the preamble information, the first synchronization field is located after the first protection field, and the preamble fixed-length field is located after the first synchronization field.

The second synchronization field, the first indication information, the preamble variable-length field, and the second protection field are included after the preamble fixed-length field, where the first indication information is located before the second protection field, and an end location of the second protection field is located at an end location of the preamble information.

For beneficial effects of the second aspect and any possible implementation, refer to the beneficial effects of the corresponding implementations in the first aspect. Details are not described herein again.

According to a third aspect, this application provides a communication apparatus. The communication apparatus includes modules or units configured to perform the method according to either of the first aspect and the second aspect.

In a possible design, the communication apparatus includes:
a communication unit, configured to send preamble information or receive preamble information, where the preamble information indicates a first node and a second node to be synchronized, the preamble information and a first time unit are within a first channel occupancy time COT, the first time unit is used for communicating data between the first node and the second node, the preamble information includes first indication information, the first indication information includes first scheduling information, and the first scheduling information is used for scheduling a first transmission resource corresponding to the first time unit; and
a processing unit, configured to communicate data in the first time unit based on the first scheduling information.

Optionally, the preamble information further includes second indication information, and the second indication information indicates a duration occupied by the first indication information.

Optionally, a value corresponding to the second indication information is a first value, the first value is different from a preset value, and the preset value is used to represent that the preamble information does not include the first indication information.

Optionally, the preset value may be any value. This is not limited in this implementation of this application. For example, the preset value may be 127, 126, 1, or the like.

Optionally, a size of the second indication information is 7 bits.

Optionally, the size of the second indication information may alternatively be 1 bit, 2 bits, 4 bits, 8 bits, 10 bits, or the like. The size of the second indication information is not limited in this implementation of this application.

Optionally, the first indication information includes first common DCI and/or first dedicated DCI.

Optionally, the preamble information further includes third indication information, the third indication information indicates a duration occupied by the first common DCI, and a duration occupied by the first dedicated DCI is associated with the duration occupied by the first common DCI.

Optionally, the third indication information may be adjusted to indicate the duration occupied by the first dedicated DCI, and the duration occupied by the first common DCI may be determined based on the duration occupied by the first indication information and the duration occupied by the first dedicated DCI.

Optionally, the preamble information may further include one piece of target indication information, and the target indication information directly indicates the duration occupied by the first dedicated DCI.

Optionally, the first dedicated DCI includes fourth indication information, and the fourth indication information indicates a transmission resource that is used to carry an acknowledgment character ACK/negative acknowledgment NACK in the first time unit.

The ACK indicates that the second node correctly receives data from the first node, and the NACK indicates that the second node incorrectly receives data from the first node.

Optionally, a "dedicatedACK-ResourceSetConf" field may be used in a "T-node-specific control information resource pool" to indicate a transmission resource for feeding back the ACK/NACK based on a first indication.

Optionally, the first dedicated DCI further includes fifth indication information, and the fifth indication information indicates a start location of the first indication information in the preamble information.

Optionally, the fifth indication information further indicates a duration occupied by the preamble DCI.

Optionally, a "preambleControlTimeResource" field may be added to the "T-node-specific control information resource pool", to indicate the start location of the first indication information in the preamble information.

Optionally, a size of the fifth indication information is 5 bits, and the start location of the first indication information in the preamble information is twice a value of the fifth indication information.

Optionally, a second COT preceding the first COT includes sixth indication information, the sixth indication information includes second scheduling information, and the second scheduling information is used for scheduling a second transmission resource corresponding to the first time unit.

Optionally, the first time unit includes seventh indication information, the seventh indication information includes third uplink scheduling information, and the third uplink scheduling information is used for scheduling a transmission resource corresponding to the first time unit.

The processing unit is specifically configured to communicate uplink data in the first time unit based on the third uplink scheduling information.

Optionally, the first time unit includes eighth indication information, the eighth indication information includes third downlink scheduling information, and the third downlink scheduling information is used for scheduling a transmission resource corresponding to the first time unit.

The processing unit is specifically configured to communicate downlink data in the first time unit based on the third downlink scheduling information.

Optionally, when both the seventh indication information and the eighth indication information are included in the first time unit,

the processing unit is specifically configured to communicate uplink data in the first time unit based on the third uplink scheduling information; and communicate downlink data in the first time unit based on the third downlink scheduling information.

Optionally, the first time unit includes ninth indication information, the ninth indication information includes third scheduling information, the third scheduling information is used for scheduling a transmission resource corresponding to the second time unit, and the first time unit and the second time unit are within the first COT.

Optionally, the ninth indication information includes second common DCI and second dedicated DCI, the second dedicated DCI includes tenth indication information, and the tenth indication information indicates a start location of the second dedicated DCI in the first time unit.

Optionally, the second dedicated DCI further includes eleventh indication information, the eleventh indication information indicates a periodicity at which some messages appear, and a basic time unit of the periodicity is a superframe (1 ms). For example, a periodicity at which DCI appears is five superframes, that is, the DCI appears once every five superframes (ms).

Optionally, a "superframePeriod" field may be used in the "T-node-specific control information resource pool", to indicate a periodicity at which some messages appear, and a basic time unit of the periodicity is a superframe (1 ms).

Optionally, the second dedicated DCI further includes twelfth indication information, and the twelfth indication information indicates an offset of some information in a periodicity.

Optionally, a "superframeOffset" field may be used in the "T-node-specific control information resource pool".

Optionally, the second dedicated DCI further includes thirteenth indication information, and the thirteenth indication information indicates a transmission resource used to carry an ACK/NACK in the second time unit.

Optionally, a "dedicatedACK-ResourceSetConf" field may be used in the "T-node-specific control information resource pool", to indicate the transmission resource used to carry the ACK/NACK in the second time unit.

Optionally, the second dedicated DCI further includes fourteenth indication information, and the fourteenth indication information indicates information about a resource used for ACK feedback in an ACK resource pool.

Optionally, a "dedicatedACK-ResourceCombConf" field may be used in the "T-node-specific control information resource pool", to indicate the information about the resource used for ACK feedback in the ACK resource pool.

Optionally, the preamble information includes a first protection field, a first synchronization field, a preamble fixed-length field, a second synchronization field, the first indication information, a preamble variable-length field, and a second protection field.

A start location of the first protection field is located at a start location of the preamble information, the first synchronization field is located after the first protection field, and the preamble fixed-length field is located after the first synchronization field.

The second synchronization field, the first indication information, the preamble variable-length field, and the second protection field are included after the preamble fixed-length field, where the first indication information is located before the second protection field, and an end location of the second protection field is located at an end location of the preamble information.

For beneficial effects of the third aspect and any possible implementation, refer to the beneficial effects of the corresponding implementations in the first aspect. Details are not described herein again.

According to a fourth aspect, an embodiment of this application provides a communication apparatus, including a processor. The processor is coupled to a memory, and may be configured to execute instructions in the memory, to implement the method according to either of the first aspect and the second aspect and any one of the possible implementations. Optionally, the communication apparatus further includes the memory. Optionally, the communication apparatus further includes a communication interface, and the processor is coupled to the communication interface.

According to a fifth aspect, an embodiment of this application provides a communication apparatus, including a logic circuit and a communication interface. The communication interface is configured to receive information or send information. The logic circuit is configured to receive information or send information through the communication interface, to enable the communication apparatus to perform the method according to either of the first aspect and the second aspect and any one of the possible implementations.

According to a sixth aspect, an embodiment of this application provides a computer-readable storage medium. The computer-readable storage medium is configured to store a computer program (which may also be referred to as code or instructions). When the computer program is run on a computer, the method according to either of the first aspect and the second aspect and any one of the possible implementations is implemented.

According to a seventh aspect, an embodiment of this application provides a computer program product. The computer program product includes: a computer program (which may also be referred to as code or instructions). When the computer program is run, a computer is enabled to perform the method according to either of the first aspect and the second aspect and any one of the possible implementations.

According to an eighth aspect, an embodiment of this application provides a chip. The chip includes a processor. The processor is configured to execute instructions. When the processor executes the instructions, the chip is enabled to perform the method according to either of the first aspect and the second aspect and any one of the possible implementations. Optionally, the chip further includes a communication interface, and the communication interface is configured to receive a signal or send a signal.

According to a ninth aspect, an embodiment of this application provides a terminal device. The terminal device includes at least one of the communication apparatus in the third aspect, the communication apparatus in the fourth aspect, the communication apparatus in the fifth aspect, or the chip in the eighth aspect.

In addition, in a process of performing the method according to either of the first aspect and the second aspect and any one of the possible implementations, a process related to sending information and/or receiving information and the like in the method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more generally understood as operations such as output, receiving, and input of the processor, unless otherwise specified, or provided that the operations do not contradict actual functions or internal logic of the operations in related descriptions.

Optionally, in a process of performing the method according to any one of the first aspect to the fourth aspect and any one of the possible implementations, the processor may be a processor specially configured to perform the method, or may be a processor that performs the method by executing computer instructions in a memory, for example, a general-purpose processor. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

In a possible implementation, the at least one memory is located outside the apparatus.

In another possible implementation, the at least one memory is located in the apparatus.

In still another possible implementation, some memories in the at least one memory are located in the apparatus, and the other memories are located outside the apparatus.

In this application, the processor and the memory may alternatively be integrated into one device, that is, the processor and the memory may alternatively be integrated.

### BRIEF DESCRIPTION OF DRAWINGS

The following briefly describes accompanying drawings used in descriptions of embodiments.
FIG. 1A is a diagram of communication domains according to an embodiment of this application;
FIG. 1B is another diagram of communication domains according to an embodiment of this application;
FIG. 2 is a diagram of frequency numbers according to an embodiment of this application;
FIG. 3A is a diagram of an LBT mode according to an implementation of this application;
FIG. 3B is a diagram of a first channel contention result according to an implementation of this application;
FIG. 3C is a diagram of a second channel contention result according to an implementation of this application;
FIG. 4 is a diagram of a possible communication system according to an embodiment of this application;
FIG. 5A is a diagram of data transmission in a first LBT mode according to an implementation of this application;
FIG. 5B is a diagram of data transmission in a second LBT mode according to an implementation of this application;
FIG. 5C is a diagram of data transmission in a third LBT mode according to an implementation of this application;
FIG. 6 is a schematic flowchart of a communication method according to an embodiment of this application;
FIG. 7 is a diagram of a first LBT frame structure according to an embodiment of this application;
FIG. 8A is a diagram of a first type of cross-superframe scheduling according to an embodiment of this application;
FIG. 8B is a diagram of a second type of cross-superframe scheduling according to an embodiment of this application;
FIG. 9A is a diagram of a first type of co-superframe scheduling according to an embodiment of this application;
FIG. 9B is a diagram of a second type of co-superframe scheduling according to an embodiment of this application;
FIG. 9C is a diagram of a third type of co-superframe scheduling according to an embodiment of this application;
FIG. 9D is a diagram of a fourth type of co-superframe scheduling according to an embodiment of this application;
FIG. 10 is a diagram of a second LBT frame structure according to an embodiment of this application;
FIG. 11 is a diagram of a structure of a communication apparatus according to an embodiment of this application; and
FIG. 12 is a diagram of a structure of another possible communication apparatus 120 according to an embodiment of this application.

### DESCRIPTION OF EMBODIMENTS

To facilitate understanding of detailed implementation of solutions in embodiments of this application, the following first describes technical terms used in embodiments of this application.

### 1. Node (node)

A node (or referred to as a communication node) is a device having a communication capability, and includes but is not limited to one or more of a terminal device, a network device, an industrial device, or an entertainment device.

The terminal device includes but is not limited to a handheld terminal, a wearable terminal, a transport means, a vehicle-mounted device, a sensing device, a smart home device, or the like. The handheld terminal includes but is not limited to a mobile phone, a tablet, a notebook computer, or the like. The wearable device includes but is not limited to a headset, a smart band, a smart watch, smart glasses, or the like. The transport means includes but is not limited to a vehicle, a ship, aircraft, rail transport (such as a subway and a high-speed railway), a logistics robot (such as an automated guided vehicle (automated guided vehicle, AGV)), or the like. The vehicle-mounted device includes but is not limited to a domain controller (domain controller, DC), a screen, a microphone, a speaker, an electronic key, keyless entry, a startup system controller, a battery management system (battery management system, BMS), or the like. The sensing device includes but is not limited to a camera, a radar, a lidar, an illumination sensor, a temperature sensor, a humidity sensor, or the like. The smart home device includes but is not limited to a projector, a smart television, a smart refrigerator, a smart home gateway, a security device, or the like.

The network device includes but is not limited to a router, a switch, a base station, or the like. The industrial device is, for example, an industrial robot or a mechanical arm. The leisure and entertainment device is, for example, a virtual reality (virtual reality, VR) device, a mixed reality (Mixed Reality, MR) device, a massage chair, a home theater, a game control device, or a 4D cinema cabin.

The node in embodiments of this application may be used in various scenarios such as intelligent vehicles, smart homes, intelligent terminals, smart manufacturing, or smart exhibition halls. In some application scenarios or some network types, a name of a device having a similar communication capability may not be referred to as a node. However, for ease of description, devices having communication capabilities are collectively referred to as nodes in embodiments of this application.

### 2. Communication domain

In a communication system, a node includes a management node (or referred to as a G node) and a managed node (or referred to as a T node). The G node manages at least one T node, and the G node is connected to the at least one T node to jointly complete a specific communication function. For example, the G node schedules, to a T node connected to the G node, a transmission resource used for data transmission, and the T node performs data transmission based on the transmission resource, to implement a specific communication function.

A communication domain includes at least one management node (or referred to as a G node) and at least one managed node (or referred to as a T node). For example, a single G node and one T node connected to the G node form a communication domain; or a single G node and a plurality of T nodes (for example, five T nodes or ten T nodes) connected to the G node form a communication domain.

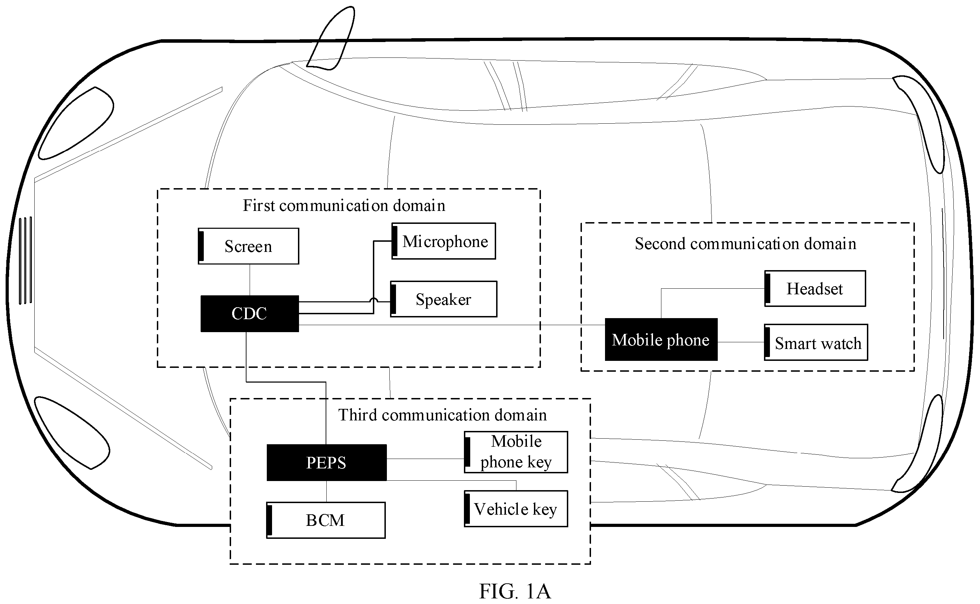

FIG. 1A is a diagram of communication domains according to an embodiment of this application. A smart car scenario is used as an example. A cockpit domain controller (cockpit domain controller, CDC) may be used as a G node, and various vehicle-mounted devices (for example, a microphone and a loudspeaker) are used as T nodes, to jointly complete a cockpit entertainment function. In this case, the CDC and the various vehicle-mounted devices form a communication domain, which is referred to as a first communication domain for ease of differentiation. Optionally, when a mobile phone is connected to the CDC, the mobile phone may also be used as a T node in the first communication domain. Similarly, when passive entry passive start (Passive Entry Passive Start, PEPS) is connected to the CDC, the PEPS may also be used as a T node in the first communication domain.

There may be a plurality of communication domains in some scenarios. As shown in FIG. 1A, the mobile phone may also be used as a G node to connect to a wearable device (for example, a headset or a smart watch). In this case, the mobile phone and the wearable device form another communication domain, for example, a second communication domain shown in FIG. 1A. For another example, the PEPS may also be used as a G node to connect to a body control module (body control module, BCM), a mobile phone key, and a vehicle key. In this case, the PEPS, the BCM, the mobile phone key, and the vehicle key form another communication domain, for example, a third communication domain shown in FIG. 1A.

In a scenario in which there are a plurality of communication domains, the plurality of communication domains may have different levels. For example, communication domains may be classified into an advanced communication domain, a general communication domain, and the like. In this case, a G node in the advanced communication domain can coordinate transmission resources, to implement coordination and coexistence of a plurality of domains. FIG. 1A is used as an example. In a case in which the G node (the mobile phone) in the second communication domain and the G node (PEPS) in the third communication domain are T nodes in the first communication domain, the first communication domain may be referred to as an advanced communication domain, and the second communication domain and the third communication domain may be referred to as general communication domains; or the second communication domain and the third communication domain are referred to as sub-communication domains of the first communication domain. In this case, the first communication domain can coordinate transmission resources, to implement coordination and coexistence of the first communication domain, the second communication domain, and the third communication domain.

In addition, in a scenario in which there are a plurality of communication domains, when a T node in an advanced communication domain is used as a G node in a general communication domain, it may mean that the advanced communication domain includes the general communication domain, or the T node in the advanced communication domain includes nodes (including T nodes and the G node) in the general communication domain. For example, the T node (the mobile phone) in the first communication domain is used as a G node in the second communication domain. In this case, it may mean that the first communication domain includes the second communication domain, or the T node in the first communication domain includes the nodes (for example, the mobile phone, the headset, and the smart watch) in the second communication domain. It should be noted that, when a T node in the second communication domain is understood as a T node in the first communication domain, the G node in the first communication domain indirectly manages the T node in the second communication domain, or the G node in the first communication domain manages the T node in the second communication domain via the G node in the second communication domain.

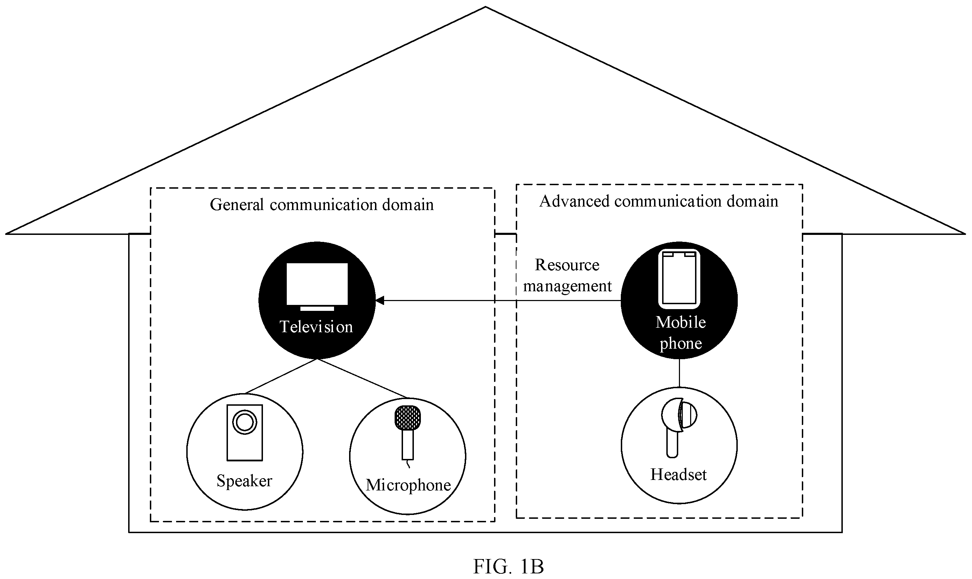

FIG. 1B is another diagram of communication domains according to an embodiment of this application. A smart home scenario is used as an example. A television, a speaker connected to the television, and a microphone belong to a communication domain, and the communication domain is a general communication domain. A mobile phone and a headset connected to the mobile phone belong to another communication domain, and the communication domain is an advanced communication domain. The mobile phone can implement management of transmission resources between a plurality of domains.

### 3. G link and T link

A communication link used by a G node to transmit data to a T node may be referred to as a G link (a downlink G link). A communication link used by a T node to transmit data to a G node may be referred to as a T link (an uplink T link).

### 4. Transmission resource

A transmission resource is a resource that can be shared by a plurality of nodes, and includes but is not limited to a time-frequency resource or the like. Nodes that share a transmission resource can detect signaling on the transmission resource.

For example, in a communication domain including a G node and T nodes, a transmission resource is a pre-configured resource that is shared by the T nodes in the communication domain. Alternatively, the transmission resource is a resource that is determined by the G node in the communication domain through channel contention (frequency number contention) and that is shared by the T nodes in the communication domain. It should be understood that channel contention may succeed (that is, a transmission resource is successfully obtained), or may fail (that is, a transmission resource is not obtained). However, whether channel contention succeeds is not a focus of attention in implementation of this application. Therefore, channel contention mentioned in subsequent descriptions all means successful channel contention (that is, a transmission resource is successfully obtained).

In a possible implementation, the transmission resource may be used for transmitting a plurality of types of signaling. For example, the transmission resource may include a transmission resource used for transmitting physical layer control signaling. A node may blindly detect physical layer control signaling in a transmission resource for transmitting the physical layer control signaling.

### 5. Detection and blind detection

Signal detection is a process of attempting to receive a signal. A T node is used as an example. The T node attempts to receive a signal on a transmission resource. If decoding and CRC check performed on the signal succeed, it is considered that the signal is successfully received.

Blind detection is a signal detection manner. On a premise that a node does not know whether information is transmitted on a specified transmission resource and does not know content of the transmitted information, the node attempts to receive a signal and identify information content of the signal. The blind detection may succeed or fail. That the blind detection succeeds means that required information is detected, and that the blind detection fails means that required information is not detected.

### 6. Scrambling

Scrambling refers to obtaining a new signal based on an original signal and a scrambling code. A reverse operation of scrambling is descrambling.

### 7. Superframe

A superframe is a time unit, and includes a plurality of radio frames. Each radio frame includes one or more symbols, and the symbols may be, for example, orthogonal frequency division multiplexing (orthogonal frequency division multiplexing, OFDM) symbols.

A SparkLink basic (SparkLink basic, SLB) access technology is used as an example. A superframe period is 1 millisecond (ms), that is, duration of a superframe is 1 ms. One superframe includes 48 radio frames, and duration of each radio frame is 1/48=20.833 microseconds (µs).

The superframe has a superframe sequence number (or referred to as a number or a superframe number), to distinguish between different superframes in a period of time. Generally, one or more bits are used for representation, that is, the superframe sequence number includes S bits, where S is a positive integer, and S>0.

Because a quantity of bits of the superframe sequence number is usually limited, rollover occurs when the superframe sequence number reaches a maximum count value. For example, a superframe sequence number is indicated by 8-bit data (from 0x00 to 0xFF). When signals are continuously sent/received in a plurality of superframes, accumulation is performed continuously in superframe sequence numbers. When the superframe sequence number reaches 0xFF, frame number rollover (rollover) occurs, and count starts from 0x00 again.

### 8. Frequency number

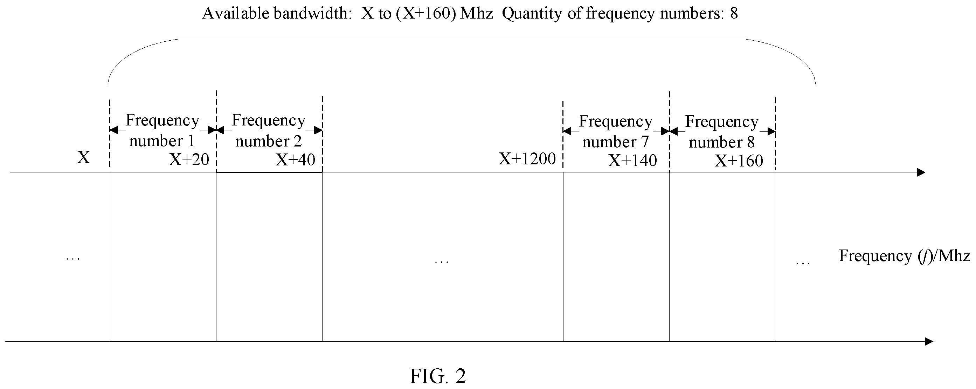

A frequency number, also referred to as a carrier, is a number of a frequency range, and indicates a transmit/receive frequency. For example, FIG. 2 is a diagram of possible frequency numbers. An available bandwidth ranges from X megahertz (MHz) to (X+160) MHz. The available bandwidth is divided into eight frequency bands based on a frequency spacing of 20 MHz. The frequency bands are numbered as 1, 2, 3, 4, ..., and 8. Numbers of these fixed frequencies are frequency numbers. It should be understood that the available bandwidth, a width of the frequency band, and a quantity of frequency numbers shown in FIG. 2 are merely examples, and are not intended to limit embodiments of this application.

The frequency numbers shown in FIG. 2 are used as an example. If an operating frequency number of a first node is the frequency number 1, a signal sent by the first node is sent within a frequency range corresponding to the frequency number 1, and/or a signal received by the first node is received within a frequency range corresponding to the frequency number 1.

When the operating frequency number is the frequency number 1, signaling, data, and the like that are sent and/or received by the first node are communicated on the frequency number 1. After the operating frequency number is switched to the frequency number 2, signaling, data, and the like that are sent and/or received by the first node are communicated on the frequency number 2.

### 9. Preamble information (or referred to as a preamble or a preamble message)

The preamble information is a segment of information that is sent, after frequency number switching (channel contention or receiving transmission resource scheduling), by a first node at a frequency number obtained after switching. For example, after frequency number switching, a segment of preamble information is first sent before the first node enters a superframe structure.

Optionally, the preamble information may indicate a change of configuration information, for example, indicate a change of information such as a random access resource pool configuration and a channel sounding reference signal (Sounding Reference Signal, SRS) resource pool configuration.

In some possible designs, the preamble information may be used to receive node time-frequency synchronization.

In some other possible designs, the preamble information may be used to obtain communication channel information, for example, used for channel estimation and channel quality evaluation. For example, the first node sends preamble information at a second frequency number, and correspondingly, a second node receives the preamble information. The second node may measure a channel between the first node and the second node based on the preamble information, to obtain channel quality and the like.

In some possible implementations, content of the preamble information may be predefined (for example, specified in a protocol), pre-configured, configured by using higher layer signaling, or the like.

### 10. Access

"Access" mentioned in embodiments of this application indicates a process in which a node establishes a connection to another node. In some specific technical scenarios, a process of "accessing" another node by one node may also be described as "associating" another node by one node.

### 11. Channel occupancy time (channel occupancy time, COT)

The channel occupancy time may be a time in which a communication domain (node) occupies a target frequency number. For example, if a time in which a first communication domain occupies a frequency number 1 is a time period from a first moment to a second moment, the time period is a COT of the first communication domain. It should be understood that a COT is a continuous period of time, and one COT is one continuous period of time.

Optionally, whether a COT includes a start moment and/or an end moment of a time period is not limited in implementations of this application. For example, whether the first moment and/or the second moment belong to the COT of the first communication domain is not limited in implementations of this application.

Optionally, one COT may include a time occupied by a preamble and at least one superframe.

Optionally, a G node in a communication domain determines, through channel contention, a frequency number and a COT that are used by the communication domain; sends preamble information to a T node in the communication domain, so that the T node is synchronized with the frequency number; and notifies the T node of the COT used by the communication domain.

That the communication domain (node) occupies the target frequency number should be understood as that the target frequency number is used for communicating data of the communication domain (node), or the communication domain (node) can communicate data at the target frequency number.

### 12. Discontinuous transmission mode (listening before talk, LBT)

In a communication scenario, a G node in a communication domain needs to determine, in a channel contention manner, a transmission resource of a first COT used by the communication domain, where the transmission resource of the first COT includes a time domain resource and a frequency domain resource (for example, the first COT and a first frequency number). A trigger condition for the G node to perform channel contention is not limited in implementations of this application. For example, when data transmission needs to be performed in the communication domain, the G node is triggered to perform channel contention; or when a preset condition is satisfied, the G node is triggered to perform channel contention.

Optionally, the communication domain releases the first frequency number when the first COT ends (at the second moment).

Optionally, after the communication domain releases the first frequency number, the first frequency number may be used for communicating data of another communication domain.

Optionally, after the communication domain releases the first frequency number, the G node in the communication domain determines, in the channel contention manner again, a transmission resource of a second COT used by the communication domain. The transmission resource of the second COT includes a time domain resource and a frequency domain resource (for example, the second COT and a second frequency number).

Optionally, the second frequency number and the first frequency number may be the same or may be different.

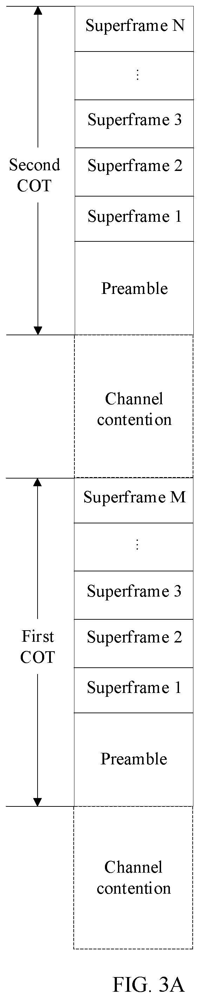

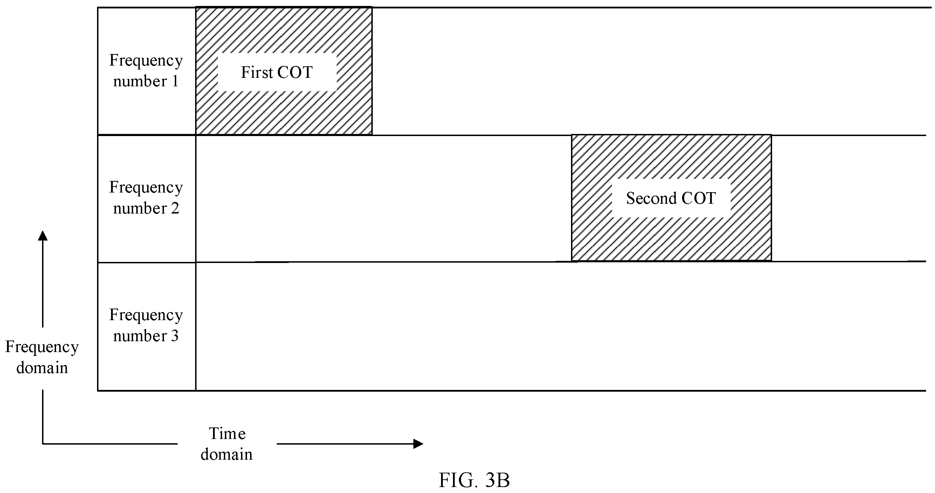

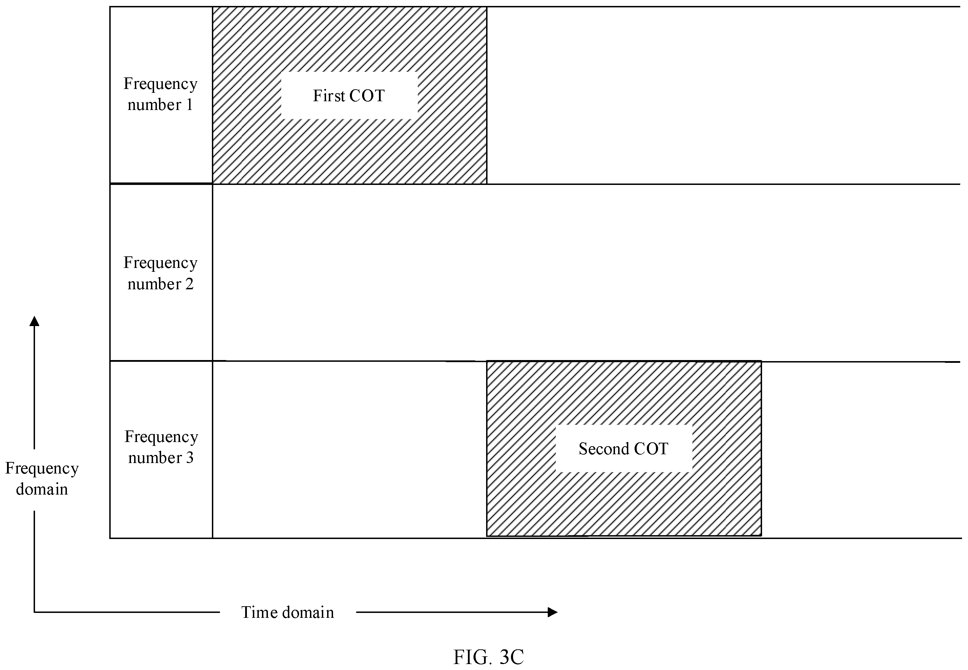

A mode in which the communication domain discontinuously occupies a frequency number for data transmission is referred to as LBT. The following describes LBT with reference to FIG. 3A, FIG. 3B, and FIG. 3C.

FIG. 3A is a diagram of an LBT mode according to an implementation of this application, and is used to show a data transmission process in the LBT mode. For ease of description, the following describes an example of a data transmission process in the LBT mode with reference to the first communication domain in FIG. 1A.

As shown in FIG. 3A, a G node (CDC) obtains a first COT or a second COT through channel contention. After the channel contention succeeds, the G node sends a preamble to a T node (the microphone or the speaker), and then a node in the first communication domain communicates data in the first COT or the second COT on a scale of superframe. The first COT and the second COT include preambles, the first COT further includes M superframes, and the second COT further includes N superframes, where M and N are integers greater than or equal to 1. A time occupied by the preamble in each of the first COT and the second COT is not limited in embodiments of this application. For example, the preamble occupies 1 millisecond (ms) or 2 ms.

Optionally, after the first COT, a trigger condition and a start moment for the G node to re-perform channel contention are not limited in embodiments of this application. For example, the end moment of the first COT may be used as the trigger condition and the start moment for the G node to re-perform channel contention, or that the first communication domain needs to perform data transmission may be used as the trigger condition for the G node to re-perform channel contention. In addition, a target moment before the first COT ends may alternatively be used as the trigger condition and the start moment for the G node to re-perform channel contention. The target moment may be a moment that precedes the end moment of the first COT by preset duration, and the preset duration is, for example, 1 microsecond (µs).

Refer to FIG. 3B and FIG. 3C. FIG. 3B is a diagram of a first channel contention result according to an implementation of this application. FIG. 3C is a diagram of a second channel contention result according to an implementation of this application. A first COT and a second COT in FIG. 3B are discontinuous in time domain, and a first COT and a second COT in FIG. 3C are continuous in time domain.

As shown in FIG. 3B, a frequency number 1, a frequency number 2, and a frequency number 3 are obtained through division in frequency domain. The first COT in FIG. 3B may be the first COT shown in FIG. 3A, and is located at the frequency number 1 in frequency domain. The second COT in FIG. 3B may be the second COT shown in FIG. 3A, and is located at the frequency number 2 in frequency domain. In addition, the first COT and the second COT are discontinuous in time domain.

As shown in FIG. 3C, a frequency number 1, a frequency number 2, and a frequency number 3 are also obtained through division in frequency domain. The first COT in FIG. 3C may be the first COT shown in FIG. 3A, and is located at the frequency number 1 in frequency domain. The second COT in FIG. 3C may be the second COT shown in FIG. 3A, and is located at the frequency number 3 in frequency domain. In addition, the first COT and the second COT are continuous in time domain.

In addition, the first COT and the second COT may be discontinuous in time domain, and are located at a same frequency number (for example, the frequency number 1) in frequency domain.

The foregoing descriptions of the technical terms are optionally used in the following embodiments.

The following describes a system architecture in embodiments of this application. It should be noted that the system architecture described in this application is intended to describe technical solutions in this application more clearly, but constitutes no limitation on the technical solutions provided in this application. A person of ordinary skill in the art may know that, with evolution of the system architecture and emergence of a new service scenario, the technical solutions provided in this application are also applied to a similar technical problem.

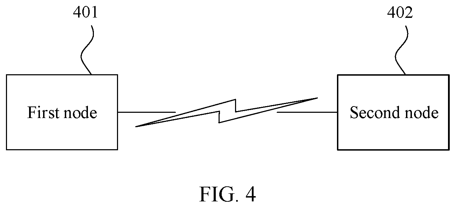

FIG. 4 is a diagram of a possible communication system according to an embodiment of this application. The communication system includes a first node 401 and a second node 402.

The first node 401 has a communication capability, and the first node 401 can send a signal or receive a signal at a specified frequency number. A frequency number used to send a signal and/or receive a signal is referred to as an operating frequency number. The operating frequency number may be changed, and a change of the operating frequency number is referred to as frequency number switching.

The second node 402 has a communication capability, and the second node 402 can receive, at an operating frequency number, a signal sent by the first node 401. That is, the first node 401 communicates with the second node 402 at the operating frequency number.

Optionally, a link for communication between the second node 402 and the first node 401 may include various types of connection media, including a wired link (for example, an optical fiber), a wireless link, a combination of a wired link and a wireless link, or the like. For example, a short-range connection technology may be used and includes SparkLink (SparkLink), 802.11b/g, Bluetooth (Bluetooth), Zigbee (Zigbee), a radio frequency identification (radio frequency identification, RFID) technology, an ultra-wideband (ultra-wideband, UWB) technology, or the like. For another example, a long-range connection technology may alternatively be used and includes but is not limited to a long term evolution (Long Term Evolution, long term evolution)-based communication technology, a 5th generation mobile communication technology (5th generation mobile networks or 5th generation wireless systems, 5th-Generation, 5G or 5G technology for short), a global system for mobile communications (global System for mobile communications, GSM), a general packet radio service (general packet radio Service, GPRS), a universal mobile telecommunications system (universal mobile telecommunications system, UMTS), or the like.

In some specific implementation scenarios, the first node may be referred to as a G node, a control node, or an access point (access point, AP). The second node may be referred to as a T node, a terminal node, or a station (station).

It should be understood that a quantity, locations, and connection relationships of nodes shown in accompanying drawings in embodiments of this application are a possible case for ease of description, and are not intended to limit a specific communication system and a specific communication scenario.

In an LBT mode (also referred to as "discontinuous transmission (discontinuous reception, DRX)"), after channel contention, a node re-accesses a frequency number. If the node is not indicated how to allocate a transmission resource after accessing the frequency number, the node cannot communicate data on an available transmission resource. Consequently, a problem such as a transmission resource waste or an increased data transmission delay is caused. For example, the first node 401 sends preamble information to the second node 402 after channel contention, to enable the second node 402 to access a specified frequency number. However, after the second node 402 accesses the specified frequency number, how to allocate a transmission resource is not indicated. As a result, after accessing the frequency number, the second node 402 cannot send data in a timely manner. Consequently, a problem of a relatively high data transmission delay occurs.

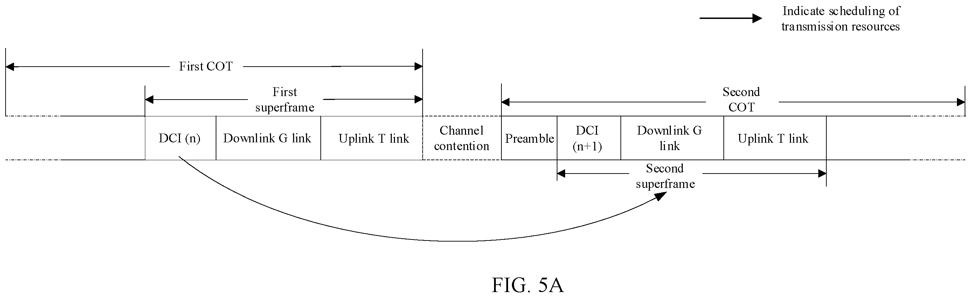

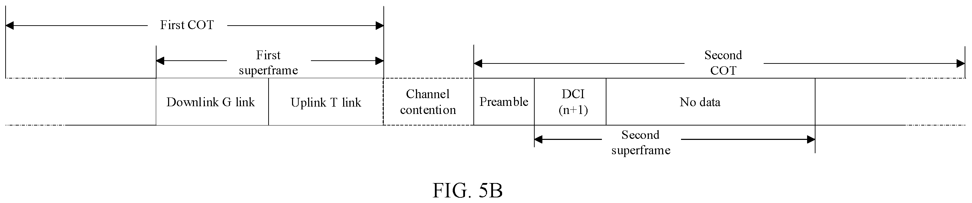

The following describes the foregoing problem with reference to FIG. 5A and FIG. 5B. FIG. 5A is a diagram of data transmission in a first LBT mode according to an implementation of this application. FIG. 5B is a diagram of data transmission in a second LBT mode according to an implementation of this application.

As shown in FIG. 5A, a first COT includes a first superframe, a second COT includes a second superframe and a preamble, the first COT and the second COT are two adjacent COTs in an LBT mode, and the first COT is located before the second COT. For example, the first COT is the first COT in FIG. 3B or FIG. 3C, and the second COT is the second COT in FIG. 3B or FIG. 3C. The first superframe is a superframe in the first COT, the second superframe is a superframe in the second COT, and DCI(n) carried in the first superframe indicates scheduling of a transmission resource of the second superframe.

Optionally, the DCI(n) indicates scheduling of a transmission resource of at least one superframe after the preamble in the second COT.

Optionally, the first superframe may not be the last superframe in the first COT.

Optionally, the second superframe is the 1^{st} superframe after the preamble in the second COT.

Optionally, DCI(n+1) indicates scheduling of a transmission resource of at least one superframe after the second superframe in the second COT.

In the diagram of data transmission shown in FIG. 5A, DCI(n) in the first superframe indicates scheduling of the transmission resource of the second superframe in the second COT, so that a node can communicate data on the second superframe. However, in a communication scenario, when the first superframe carries all to-be-sent data, the first superframe does not carry DCI that indicates transmission resource scheduling, that is, the first superframe does not include DCI(n).

As shown in FIG. 5B, the first superframe does not include DCI, the second superframe includes only the DCI(n+1), and the DCI(n+1) indicates scheduling of the transmission resource of the at least one superframe after the second superframe in the second COT. For descriptions of the first COT and the second COT in FIG. 5B, refer to the descriptions of the first COT and the second COT in FIG. 5A.

Optionally, the second superframe may not carry any data, that is, the second superframe does not include the DCI(n+1).

It should be understood that FIG. 5A and FIG. 5B show examples of the superframe including DCI, a downlink G link, and an uplink T link, and content shown in FIG. 5A and FIG. 5B should not be used as a limitation on specific implementation of the superframe. For example, DCI may be distributed discretely in a superframe. Specifically, the DCI(n) in the superframe shown in FIG. 5A may consist of a plurality of pieces of sub-DCI, the plurality of pieces of sub-DCI are evenly distributed in the first superframe, and a spacing of the plurality of pieces of sub-DCI is 20 µs.

Because the first superframe does not include indication information (DCI(n)) that indicates the second superframe to schedule a transmission resource, the second superframe cannot be used for data transmission. This not only wastes precious transmission resources, but also prevents to-be-sent data from being sent in a timely manner, thereby increasing a data transmission delay.

In view of this, embodiments of this application provide a communication method and a related apparatus, so that to-be-sent data can be sent in a timely manner, thereby reducing a data transmission delay.

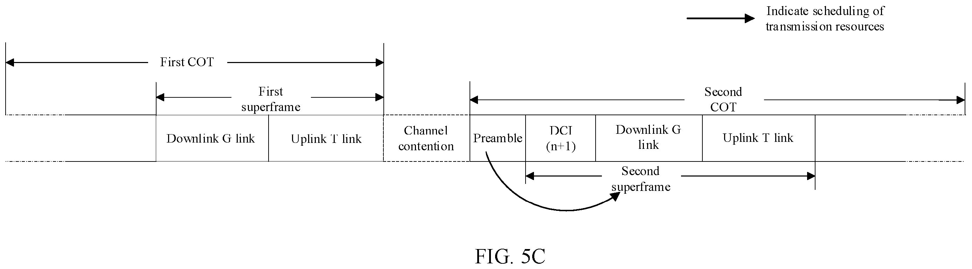

FIG. 5C is a diagram of data transmission in a third LBT mode according to an implementation of this application. A first COT includes a first superframe, a second COT includes a second superframe and a preamble, and the first COT and the second COT are two adjacent COTs in the LBT mode.

As shown in FIG. 5C, regardless of whether the first superframe carries DCI used for scheduling the second superframe, the preamble in the second COT can indicate scheduling a transmission resource of the second superframe, so as to avoid a case in which the transmission resource corresponding to the second superframe cannot be used for data transmission, thereby achieving an effect of reducing a data transmission delay.

In a possible implementation, the preamble information sent by the first node to the second node includes first indication information, the first indication information carries first scheduling information, and the first scheduling information is used for scheduling a transmission resource of a first time unit (for example, the second superframe shown in FIG. 5C), so that the second node schedules the transmission resource of the first time unit based on the first scheduling information, to send to-be-sent data in a timely manner by using the transmission resource of the first time unit, thereby reducing a data transmission delay. The first time unit may be a continuous period of time in a COT, and the first time unit may include one or more superframes. For the second time unit mentioned in the subsequent description, refer to the description of the first time unit.

It should be understood that the first indication information may be configured in the preamble information by using signaling (for example, higher layer signaling). Alternatively, the first indication information may be obtained by the first node in advance. For example, the first indication information is specified in a protocol, or is preconfigured in the first node.

The following describes in detail the method in embodiments of this application.

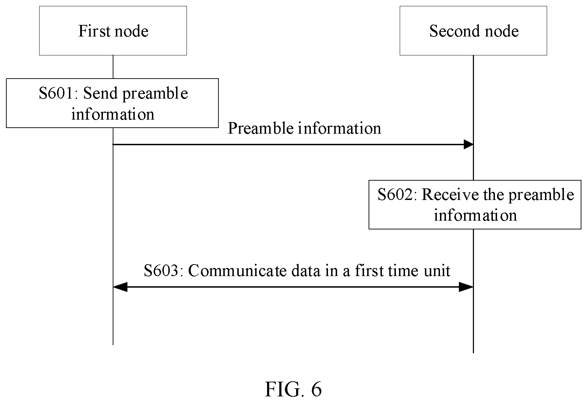

FIG. 6 is a schematic flowchart of a communication method according to an embodiment of this application. Optionally, the method may be applied to a communication system, for example, applied to the communication system shown in FIG. 1A, FIG. 1B, or FIG. 4.

The communication method shown in FIG. 6 may include one or more of step S601 to step S603. For example, in some solutions, only step S601 and step S603 may be included. It should be understood that, herein, for ease of description, a sequence of step S601 to step S603 is used for description, but this is not intended to limit execution necessarily in the foregoing sequence. An execution sequence, execution time, a quantity of execution times, and the like of the foregoing one or more steps are not limited in embodiments of this application. Step S601 to step S603 are specifically as follows:

### Step S601: A first node sends preamble information.

The first node is a node having a communication capability. Further, the first node has a management capability, for example, may send scheduling information to schedule a time resource. Optionally, the first node sends the preamble information, and the preamble information may be received by another node, for example, received by a second node. The following is described by using an example in which the first node sends the preamble information and the second node correspondingly receives the preamble information from the first node.

Data may be communicated between the first node and the second node. The first node and the second node may perform transmission within a channel occupancy time COT. In this embodiment of this application, the COT includes preamble information and a time unit, the preamble information indicates the first node and the second node to be synchronized, and the time unit is used for communicating data between the first node and the second node.

In this embodiment of this application, the preamble information includes first indication information, the first indication information includes first scheduling information, the first scheduling information is used for scheduling a first transmission resource corresponding to a first time unit, and the first scheduling information may be uplink scheduling information, downlink scheduling information, or the like. The first time unit is used for communicating data between the first node and the second node. The preamble information and the first time unit are within a first channel occupancy time COT.

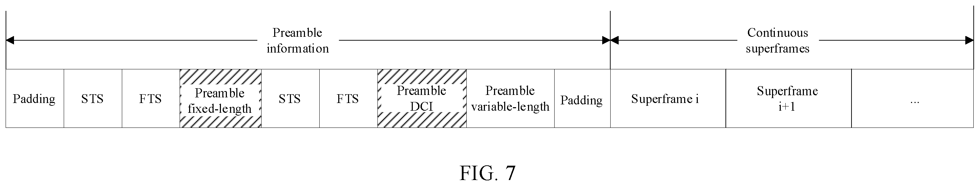

**The following further describes, with reference to** **FIG. 7****, the preamble information provided in this embodiment of this application.** FIG. 7 is a diagram of a first LBT frame structure according to an embodiment of this application. As shown in FIG. 7, the LBT frame structure consists of preamble information and continuous superframes. The continuous superframes may be a plurality of contiguous superframes in time domain. For example, a superframe i and a superframe i+1 are adjacent superframes in time domain. It may be understood that the LBT frame structure may alternatively consist of one preamble and one superframe.

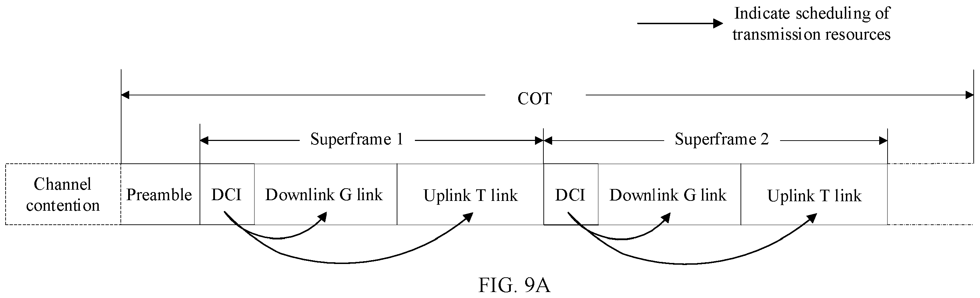

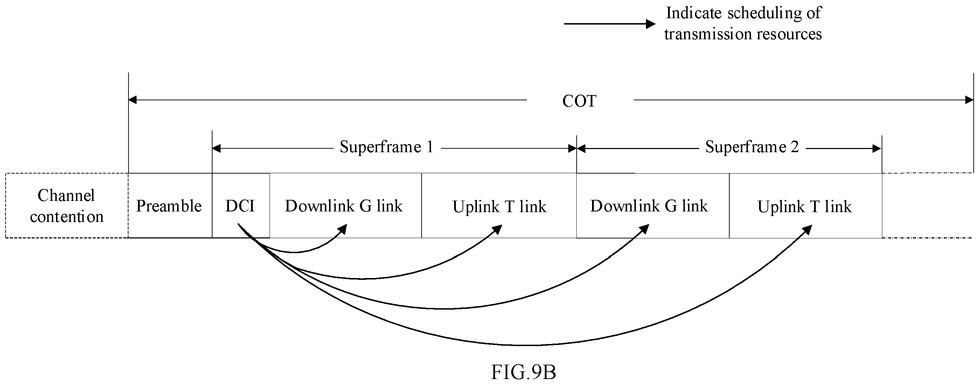

The first indication information is also referred to as a "preamble DCI" field in the LBT frame structure, and the "first scheduling information" includes scheduling information for an uplink T link and/or a downlink G link. The first time unit and the preamble information are within a same COT. FIG. 3A is used as an example. When the preamble information is the preamble in the first COT, the first time unit includes the superframe 1 in the first COT. When the preamble information is the preamble in the second COT, the first time unit includes the superframe 1 in the second COT. The first transmission resource is a transmission resource determined based on the first scheduling information, and the transmission resource is a transmission resource corresponding to the first time unit. Optionally, when a scheduling manner is "cross-superframe scheduling", the first transmission resource may alternatively be a transmission resource determined based on DCI in the first time unit. For related descriptions, refer to the following descriptions of FIG. 9A and FIG. 9B.

Further, the preamble information may further include a "preamble fixed-length" field, the "preamble fixed-length" field includes second indication information, and the second indication information indicates a duration occupied by the first indication information. In addition, the preamble information may further include fields such as "padding", "FTS", "STS", and "preamble variable-length". The following describes the fields in the LBT frame structure shown in FIG. 7 one by one.

### Field 1: "Preamble DCI" field

The "preamble DCI" field is used to carry the first indication information, and includes a "preamble common DCI (also referred to as first common DCI)" field and/or a "preamble dedicated DCI (also referred to as first dedicated DCI)" field.

In some solutions, the "preamble common DCI" field is used to carry a common/broadcast message. For example, the message can be detected by all T nodes in a communication domain, and the T node performs a corresponding data transmission task based on the "preamble common DCI", to implement a corresponding function. With reference to FIG. 1A, the T nodes in the first communication domain include a microphone and a speaker, a "preamble common DCI" field sent by the CDC is detected by the microphone and the speaker, and the microphone and the speaker perform corresponding data transmission tasks based on the "preamble common DCI" sent by the CDC.

In some solutions, the "preamble dedicated DCI" field is used to carry a dedicated message. A T node in the communication domain performs blind detection on the received "preamble dedicated DCI" field, and performs data transmission based on data that succeeds in the blind detection. Still with reference to FIG. 1A, a "preamble dedicated DCI" field sent by the CDC in the first communication domain is detected and undergoes blind detection by the microphone and the speaker, and the microphone and the speaker perform data transmission based on only a message that succeeds in the blind detection. It may be understood that the "preamble dedicated DCI" field includes one or more dedicated messages, and one dedicated message may succeed in blind detection by one T node, or one T node can successfully perform blind detection on only one dedicated message.

Optionally, in time domain, the "preamble common DCI" field is before the "preamble dedicated DCI" field. Optionally, in time domain, the "preamble DCI" field may be located at any location between the "preamble fixed-length" field (which is described below) and the "preamble variable-length padding" field (which is described below) in time domain. This is not limited in embodiments of this application.

Optionally, in frequency domain, the "preamble DCI" field may occupy all frequency domain resources obtained through channel contention. Correspondingly, both the "preamble common DCI" field and the "preamble dedicated DCI" field may occupy all the frequency domain resources obtained through channel contention.

Optionally, in this embodiment of this application, indication information (also referred to as the second indication information) carried in the "preamble fixed-length" field indicates quantities of symbols occupied by the "preamble common DCI" field and the "preamble dedicated DCI" field. For specific descriptions, refer to subsequent descriptions of the "preamble fixed-length" field. Details are not described herein.

Optionally, resources occupied by the "preamble dedicated DCI" field and an acknowledgment character (acknowledgment character, ACK)/negative acknowledgment (negative acknowledgment, NACK) may be configured by using higher layer signaling. For example, the higher layer signaling may be X resource control (X resource control, XRC). In some scenarios, indication information indicating the "preamble dedicated DCI" field may be referred to as a "T-node-specific control information resource pool" corresponding to the preamble DCI, and indication information indicating the resource occupied by the ACK/NACK may be referred to as an "ACK resource pool".

The following describes structures of the "T-node-specific control information resource pool", "ACK resource pool information", and "ACK resource pool set information" by using examples.
1. The structure of the "T-node-specific control information resource pool" corresponding to the preamble DCI may be shown as follows:
   **Structure 1:** 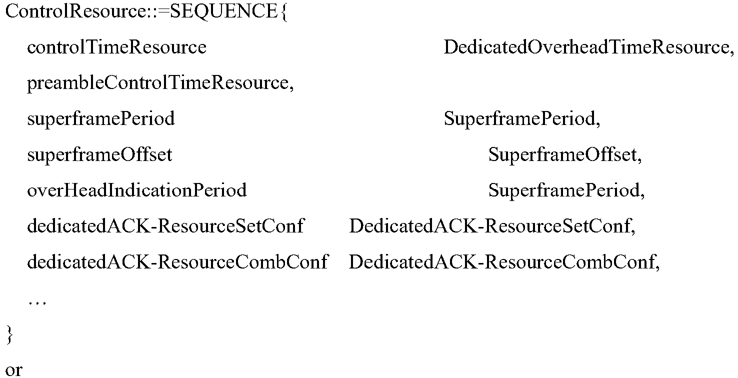
   **Structure 2:**

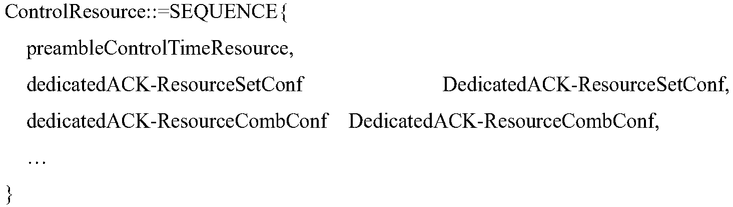

The "T-node-specific control information resource pool" corresponding to the preamble DCI is explained as follows:
(a) A dedicated overhead time resource (controlTimeResource) (also referred to as tenth indication information) indicates a location of the dedicated DCI in the superframe. Specifically, a time domain location of a group of T-node-specific DCI resources (also referred to as dedicated DCI) in a superframe is indicated. For example, the dedicated DCI occupies a maximum of eight symbols in a superframe.
(b) A preamble control time resource (preambleControlTimeResource) (also referred to as fifth indication information) indicates a start location of the "preamble DCI" field in the "preamble information" and a length of the "preamble DCI" field. Optionally, the indication information is used in an LBT mode.

Optionally, the preambleControlTimeResource occupies M bits, and M is an integer greater than or equal to 1. For example, M may be equal to 7, the first five bits in the seven bits are used to determine the start location of the preamble DCI, and the last two bits are used to represent a quantity of symbols occupied by the preamble DCI. Specifically, a value corresponding to the first five bits multiplied by 2 represents the start location of the preamble DCI. For example, if the first five bits are "10000" and the value corresponding to the first five bits is 16, the start location of the preamble DCI is 16×2=32. In other words, the start location of the preamble DCI is the 32^{nd} symbol in the preamble information. The quantity of symbols occupied by the preamble DCI satisfies the following formula: power(2, a value corresponding to the last two bits plus one). For example, if the last two bits are "11" and the value corresponding to the last two bits is 3, the quantity of symbols occupied by the preamble DCI is 2^4=16.
(c) A superframe period (superframePeriod) (also referred to as eleventh indication information) indicates a DCI periodicity, for example, indicates that the DCI periodicity is five superframes, that is, the DCI periodicity is 5 ms, or DCI appears every 5 ms.
(d) A superframe offset (superframeOffset) (also referred to as twelfth indication information) indicates an offset of DCI within a periodicity. For example, DCI appears at a periodicity of 5 ms, and the twelfth indication information may indicate that the DCI is at the X^{th} ms of the periodicity. For example, the twelfth indication information may indicate that the DCI is at the 3^{rd} ms of the periodicity. In addition, "superframeOffset" and "superframePeriod" satisfy the following relationship: mod(superframe number, superframePeriod+1)=superframeOffset. For example, when a remainder of dividing the superframe number by "superframePeriod+1" is equal to "superframeOffset", a superframe corresponding to the superframe number includes DCI.
(e) An overhead indication period (overHeadIndicationPeriod) (also referred to as fifteenth indication information) indicates a quantity of superframes indicated by DCI. For example, control resource information of the preamble DCI is used for scheduling transmission resources corresponding to five superframes.
(f) A dedicated ACK resource set configuration (dedicatedACK-ResourceSetConf) (also referred to as fourth indication information or thirteenth indication information) indicates a specific ACK resource pool in an ACK resource pool set. For example, a transmission resource used to carry an ACK/NACK in the second time unit is indicated by using a dedicated ACK resource set configuration, so that the second node can feed back an ACK/NACK by using the specified transmission resource, and the first node can receive, on the specified transmission resource, the ACK/NACK fed back by the second node, thereby avoiding a phenomenon that the second node cannot feed back the ACK/NACK in a timely manner.
(g) A dedicated ACK resource comb configuration (dedicatedACK-ResourceCombConf::=INTEGER(0..15)) (also referred to as fourteenth indication information) indicates information about a resource used for ACK feedback in an ACK resource pool. 0000 represents that the comb is 1; 0001 represents that the comb is 2 and a subcarrier with an even number is used; 0010 represents that the comb is 2 and a subcarrier with an odd number is used; 0011 represents that the comb is 2 and all subcarriers are used; 0100 represents that the comb is 4 and a subcarrier with a number ≡ 0 (mod 4) is used; 0101 represents that the comb is 4 and a subcarrier with a number ≡ 1 (mod 4) is used; 0110 represents that the comb is 4 and a subcarrier with a number ≡ 2 (mod 4) is used; 0111 represents that the comb is 4 and a subcarrier with a number ≡ 3 (mod 4) is used; 1000 represents that the comb is 4, and a subcarrier with a number ≡ 0 (mod 4) and a subcarrier with a number ≡ 1 (mod 4) are used; 1001 represents that the comb is 4, and a subcarrier with a number ≡ 2 (mod 4) and a subcarrier with a number ≡ 3 (mod 4) are used; 1010 represents that the comb is 4, and a subcarrier with a number ≡ 0 (mod 4), a subcarrier with a number ≡ 1 (mod 4), and a subcarrier with a number ≡ 2 (mod 4) are used; 1011 represents that the comb is 4 and all subcarriers are used; and 1100 represents that comb information is determined based on a dynamic scheduling information indication. Optionally, the comb information may alternatively be carried by using DCI.

It should be noted that the first indication information includes one or more of the fourth indication information, the fifth indication information, and the tenth indication information to the fifteenth indication information. Specifically, the first indication information includes preamble dedicated DCI, and the preamble dedicated DCI includes the fourth indication information, the fifth indication information, and the tenth indication information to the fifteenth indication information.

Optionally, the "T-node-specific control information resource pool" corresponding to the preamble DCI includes the foregoing items (b), (e), and (g), and may further include one or more of (a), (c), (d), and (f). However, the items (a), (c), and (d) included are ignored (ignored) during parsing of the "T-node-specific control information resource pool" corresponding to the preamble DCI.

Optionally, a "T-node-specific control information resource pool" corresponding to general DCI includes the foregoing items (a), (c), (d), (e), (f), and (g), and may further include the item (b). However, the item (b) included is ignored (ignored) during parsing of the "T-node-specific control information resource pool" corresponding to the general DCI. The foregoing general DCI is DCI located in a superframe. The first COT in FIG. 3A is used as an example. DCI located in the superframe 1, the superframe 2, or the superframe 3 may be referred to as general DCI.

2. The structure of the ACK resource pool information may be shown as follows:

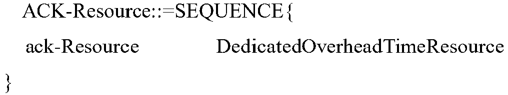

The ACK resource pool information indicates one group of resources used to feed back ACK information in a superframe that consists of 48 radio frames. Each superframe includes a resource that is for feeding back ACK information and that is indicated by the information.

3. The structure of the ACK resource pool set information may be shown as follows:

ACK-ResourceSetConf ::=SEQUENCE (SIZE (1..32)) OF ACK-Resource

The ACK resource pool set information indicates a plurality of groups of resource pools used to feed back ACK information in a superframe that consists of 48 radio frames. Each superframe includes an ACK resource pool set indicated by the information. A maximum of 32 resource pools for feeding back ACK information can be configured in each superframe.

Optionally, the first COT in FIG. 3A is used as an example. The "preamble DCI" field is, for example, a field in a preamble, the first time unit is, for example, the superframe 1, and the first transmission resource is a transmission resource corresponding to the superframe 1.

Optionally, the first COT in FIG. 3A is also used as an example. The first time unit may alternatively be a plurality of superframes adjacent to the superframe 1. For example, the first time unit may be the superframe 1, the superframe 2, and the superframe 3. Optionally, a quantity of superframes included in the first time unit is determined by the item (6) in the "T-node-specific control information resource pool".

### Field 2: "Preamble fixed-length" field

The "preamble fixed-length" field is used to carry second indication information, and the second indication information indicates a duration occupied by the "preamble DCI" field (the first indication information). The duration may be indicated in a manner of duration, a quantity of Ts, a quantity of symbols, or the like.

For example, the second indication information may indicate duration occupied by the "preamble DCI" field. For example, the second indication information indicates that the "preamble DCI" field occupies 29.391 µs, 30 µs, or the like. For example, the second indication information may indicate a quantity of Ts occupied by the "preamble DCI" field. For example, the second indication information indicates that the "preamble DCI" field occupies 780 Ts, 1560 Ts, or the like. For example, the second indication information may indicate a quantity of symbols occupied by the "preamble DCI" field. For example, the second indication information indicates that the "preamble DCI" field occupies 10 symbols, and each symbol occupies 78 Ts.

In a possible implementation, the "preamble fixed-length" field further includes third indication information, and the third indication information indicates a duration occupied by the "preamble common DCI" field (the first indication information).

For example, the third indication information may indicate duration occupied by the "preamble common DCI" field. For example, the third indication information indicates that the "preamble common DCI" field occupies 19.391 µs, 20 µs, or the like. For example, the third indication information may indicate a quantity of Ts occupied by the "preamble common DCI" field. For example, the third indication information indicates that the "preamble common DCI" field occupies 78 Ts, 156 Ts, or the like. For example, the third indication information may indicate a quantity of symbols occupied by the "preamble common DCI" field. For example, the third indication information indicates that the "preamble common DCI" field occupies one symbol, and each symbol occupies 78 Ts.

In a possible implementation, a duration occupied by the "preamble dedicated DCI" may be determined based on the second indication information and the third indication information. Alternatively, the duration occupied by the "preamble dedicated DCI" is associated with the second indication information and the third indication information. Alternatively, the duration occupied by the preamble dedicated DCI is associated with the duration occupied by the preamble common DCI.

For example, the duration occupied by the "preamble dedicated DCI" is equal to the duration occupied by the "preamble DCI" field minus the duration occupied by the "preamble common DCI" field. For example, if the duration occupied by the "preamble DCI" field is 780 Ts, and the duration occupied by the "preamble common DCI" field is 78 Ts, the duration occupied by the "preamble dedicated DCI" is 780 Ts-78 Ts=702 Ts. For example, if the duration occupied by the "preamble DCI" field is 30 µs, and the duration occupied by the "preamble common DCI" field is 20 µs, the duration occupied by the "preamble dedicated DCI" is 30 µs-20 µs=10 µs. For example, if the "preamble DCI" field occupies 10 symbols, and the "preamble common DCI" field occupies 1 symbol, the "preamble dedicated DCI" occupies 9 symbols (10-1=9), where one symbol may occupy 78 Ts.

In a possible implementation, the third indication information is carried by using X bits, where X is an integer greater than or equal to 1. For example, X is 1, 2, 3, or 4.

Optionally, the third indication information is carried by using two bits, which is specifically shown in Table 1 or Table 2.

**Table 1**

| Third indication information | Quantity of symbols occupied by the "preamble common DCI" field |
|---|---|
| "00" | 4 |
| "01" | 8 |
| "10" | 12 |
| "11" | Reserved |

**Table 2**

| Third indication information | Quantity of symbols occupied by the "preamble common DCI" field |
|---|---|
| "00" | Reserved |
| "01" | 4 |
| "10" | 8 |
| "11" | 12 |

For example, Table 1 is used as an example. When the third indication information is "00", the quantity of symbols occupied by the "preamble common DCI" field is 4. The third indication information being "11" represents reserved indication information. For example, "11" may indicate that the quantity of symbols occupied by the "preamble common DCI" field is 0, or "11" may indicate that the quantity of symbols occupied by the "preamble common DCI" field is 16. For descriptions of other content in Table 1 or Table 2, refer to the foregoing descriptions.

In a possible implementation, the second indication information is carried by using Y bits, where Y is an integer greater than or equal to 1. For example, X is 4, 5, 6, or 7.

Optionally, the second indication information is carried by using seven bits, which is specifically shown in Table 3.

**Table 3**

| Second indication information | Quantity of symbols occupied by the "preamble DCI" field |
|---|---|
| "0000000" | 0 (preset value) |
| "0000001" | 1 |
| "0000010" | 2 |
| "0000011" | 3 |
| "..." | ... |
| "1001011" | 75 |
| "1001100" | 76 |
| "1001101" | Reserved |
| "1001110" | Reserved |
| "..." | ... |

As shown in Table 3, a value corresponding to the second indication information indicates the quantity of symbols occupied by the "preamble DCI" field. When the second indication information is "0000000", the quantity of symbols occupied by the "preamble DCI" field is 0. When the second indication information is "1001100", the quantity of symbols occupied by the "preamble DCI" field is 76. The second indication information being "1001101" represents reserved indication information. For example, the second indication information being "1001101" indicates that the quantity of symbols occupied by the "preamble DCI" field is 0. For another example, the second indication information being "1001110" indicates that the quantity of symbols occupied by the "preamble DCI" field is 1. For descriptions of other content in Table 3, refer to the foregoing descriptions.

Optionally, when the second indication information indicates that the duration occupied by the "preamble DCI" is 0, the value corresponding to the second indication information may be referred to as a preset value. As shown in Table 3, the preset value of the second indication information is 0.

With reference to Table 1 and Table 3, the duration occupied by the "preamble dedicated DCI" is shown in Table 4.

**Table 4**

| Second indication information | Third indication information | Quantity of symbols occupied by the "preamble dedicated DCI" field |
|---|---|---|
| "0001000" | "00" | 4 |
| "0001001" | | 5 |
| "0001010" | "01" | 2 |
| "0001011" | | 3 |
| "..." | | |
| "1001011" | "10" | 63 |
| "1001100" | | 64 |

As shown in Table 4, when the second indication information is "0001000 (12)", and the third indication information is "00 (4)", the quantity of symbols occupied by the "preamble dedicated DCI" field is 4. When the second indication information is "1001011 (75)" and the third indication information is "10 (12)", the quantity of symbols occupied by the "preamble dedicated DCI" field is 63. For descriptions of other content in Table 4, refer to the foregoing descriptions.

In a possible implementation, the "preamble fixed-length" field further includes target indication information, and the target indication information indicates the duration occupied by the "preamble dedicated DCI" field.

Optionally, for descriptions of the target indication information, refer to the descriptions of the second indication information or the third indication information. For example, the fourth indication may indicate a quantity of symbols occupied by the "preamble dedicated DCI", a quantity of Ts, duration, or the like.

In a possible implementation, the target indication information is carried by using Z bits, where Z is an integer greater than or equal to 1. For example, Z is 4, 5, 6, or 7.

Optionally, the target indication information is carried by using six bits, which is specifically shown in Table 5.

**Table 5**

| Target indication information | Quantity of symbols occupied by the "preamble dedicated DCI" field |
|---|---|
| "000000" | 1 |
| "000001" | 2 |
| "000010" | 3 |
| "000011" | 4 |
| "..." | ... |
| "111110" | 62 |
| "111111" | 63 |

As shown in Table 5, when the target indication information is "000000", the quantity of symbols occupied by the "preamble dedicated DCI" field is 1. When the target indication information is "000011", the quantity of symbols occupied by the "preamble dedicated DCI" field is 4. When the target indication information is "111111", the quantity of symbols occupied by the "preamble dedicated DCI" field is 63. For descriptions of other content in Table 5, refer to the foregoing descriptions.

In this embodiment of this application, durations (quantities of symbols, where Ts occupied by each symbol is not limited in this application, for example, each symbol occupies 78 Ts) occupied by the "preamble DCI" field, the "preamble common DCI" field, and the "preamble dedicated DCI" field are respectively indicated by using the second indication information, the third indication information, and the target indication information, so that a receive end (the second node) can accurately parse the "preamble DCI" field based on the indication information, to obtain information carried by the "preamble DCI" field.

Optionally, the quantity of symbols occupied by the "preamble DCI" field is less than or equal to 76. When seven bits are used to carry the second indication information, the quantity of symbols occupied by the "preamble DCI" field can be accurately indicated (a maximum value represented by seven bits is 127); and in addition, some information can be further reserved for extension (for example, "1001110"). Optionally, "dedicated DCI" is less than or equal to 64 symbols, and "common DCI" is less than or equal to 12 characters.

Optionally, the first node can further configure a specified quantity of pieces of DCI based on the second indication information, the third indication information, or the target indication information, to avoid a case in which DCI is configured but is not used. For example, if it is determined, based on the second indication information and the third indication information, that the "preamble dedicated DCI" field occupies 16 symbols, the first node may configure two pieces of dedicated DCI by using XRC signaling, and each piece occupies eight symbols, to avoid a case in which eight pieces of dedicated DCI are configured by using XRC signaling. If the DCI configured by using the XRC signaling is not used, it may be identified by another communication domain as that a channel corresponding to the DCI is idle, and the channel is to be preempted. Therefore, configuring a proper quantity of pieces of DCIs can further avoid a case in which a channel state is incorrectly identified.

Optionally, the "preamble fixed-length" field is placed in duration of 38.09 µs.

Optionally, the "preamble fixed-length" field is carried by using 15 symbols, and each symbol may occupy 78 Ts.

Optionally, the "preamble fixed-length" field is carried by using 1170 Ts.

The "preamble fixed-length" field in FIG. 7 may be carried by using 15 characters. Because a new bit is added to the "preamble fixed-length" field shown in FIG. 7, the manner of adding a symbol can ensure that demodulation performance remains unchanged (a code rate remains unchanged), so that the second node accurately obtains, through parsing, information carried in the "preamble fixed-length" field.

**Field 3: "Padding" field (also referred to as "protection field")**

The "padding" field is also called "padding". The "padding" field may use any data, and usually consists of a plurality of bits "0". A length of the "padding" field may also be adjusted as required to ensure that a length of the entire data packet satisfies a requirement of a minimum frame length. For example, the "padding" field is used to ensure that the length of the preamble information shown in FIG. 7 satisfies the requirement of the minimum frame length.

The "padding" field after the "preamble variable-length" field in FIG. 7 may also be referred to as "preamble variable-length padding", and is used to ensure radio frame alignment. For ease of distinguishing, a "protection field" located at a start location in the preamble information may be referred to as a "first protection field", and a "protection field" located at an end location in the preamble information may be referred to as a "second protection field".

In a possible implementation, a start location of the "first protection field" is located at the start location of the preamble information, and an end location of the "second protection field" is located at the end location of the preamble information; or in time domain, a start location of the "first protection field" is located at the start location of the preamble information, and an end location of the "second protection field" is located at the end location of the preamble information.

**Field 4 and field 5: "First training signal (first training signal, FTS)" field and "secondary training signal (secondary training signal, STS)" field**

Both the FTS and the STS are signals used for time synchronization in the SLB access technology. The FTS is a coarse synchronization signal, and the STS is a fine synchronization signal. One FTS and one STS constitute a group. In each group of signals, a signal that first appears in time domain is an FTS, and a signal that appears later in time domain is an STS. The FTS is a ZC (Zadoff-Chu) sequence with a root index of 1 or 40 and a length of 39. The STS is a ZC sequence with a root index ranging from 1 to 20 and a length of 39.

**Field 6: "Preamble fixed-length" field (also referred to as "SIGNAL_fixed-length")**

The "preamble fixed-length" field may carry indication information, and the indication information may be used to indicate a size of a COT. FIG. 3A is used as an example. The "preamble fixed-length" field in the first COT may carry indication information that indicates a size of the first COT. The "preamble fixed-length" field may further carry other information. This is not limited in embodiments of this application.

Optionally, the "preamble fixed-length" field is placed in duration of 35.547 µs.

Optionally, the "preamble fixed-length" field is carried by using 14 symbols, and each symbol may occupy 78 basic time units Ts. Ts satisfies the following condition: Ts=1/fs, where fs is a carrier frequency, for example, fs=30.72 MHz.

Optionally, the "preamble fixed-length" field is carried by using 1092 Ts.

**Field 7: "Preamble variable-length" field (also referred to as "SIGNAL_variable-length")**

The "preamble variable-length" field may be used to send a system message (for example, a Glink-SystemInfo-Message), to send a broadcast-type message to another node in the communication domain in a preamble. Compared with sending a system message in a superframe, sending a system message in a preamble can help reduce a transmission delay.

In a possible implementation, the first indication information is located after the "preamble fixed-length" field, and is further located before the "second protection field".

For example, as shown in FIG. 7, the fields in the preamble information are successively arranged in time domain as follows: "padding" (first protection field), "STS", "FTS", "preamble fixed-length", "STS", "FTS", "preamble DCI", "preamble variable-length", and "padding (also referred to as "preamble variable-length padding" or second protection field)".

Optionally, the fields in the preamble information may alternatively be successively arranged in time domain as follows: "padding" (first protection field), "STS", "FTS", "preamble fixed-length", "preamble DCI", "STS", "FTS", "preamble variable-length", and "padding (also referred to as "preamble variable-length padding" or second protection field)".

In some possible implementations, before sending the preamble information, the first node may first perform channel contention. Channel contention is also referred to as transmission resource contention, channel contention, or the like, and is a manner in which a communication domain obtains a transmission resource.

**The following describes an occasion for sending the preamble information.** In a possible case, the first node immediately sends the preamble information to the second node after channel contention.

In still another possible case, the first node sends the preamble information to the second node at a moment corresponding to third preset duration after channel contention. The third preset duration may be 1 µs, 1 ms, or the like. This is not limited in embodiments of this application. In still another possible case, the first node may alternatively send the preamble information to the second node at an end moment of a previous COT.

In some possible implementations, the preamble information may occupy all frequency domain resources obtained through channel contention.

**Step S602: The second node receives the preamble information.**

It may be understood that the first node sends the preamble information to the second node, and correspondingly, the second node receives the preamble information sent by the first node. For content included in the preamble information, refer to the foregoing description. For example, the preamble information includes the "preamble fixed-length" field, the "preamble DCI" field, and the like.

The second node performs the following operations on the received preamble information:
(1) The second node performs time synchronization based on FTS information and STS information in the preamble information.
(2) The second node determines, based on the "preamble fixed-length" field in the preamble information, the "preamble DCI" field, and durations occupied by the "preamble common DCI" field and the "preamble dedicated DCI" field.

Optionally, if the "preamble fixed-length" field indicates that the duration (the quantity of symbols) occupied by the "preamble DCI" field is zero, it may be understood as that the preamble information does not include the "preamble DCI" field. For example, as shown in Table 3, when the second indication information is "0000000", it indicates that the quantity of symbols occupied by the "preamble DCI" field is 0.

Optionally, when a value corresponding to the second indication information is a preset value (the preset value is 0 in the example of Table 3), it indicates that the duration occupied by the "preamble DCI" field is 0.

Optionally, when the "preamble fixed-length" field indicates that the duration (the quantity of symbols) occupied by the "preamble DCI" field is a first value, and the first value is not equal to the preset value, the second node performs blind detection on the "preamble DCI" field in the preamble information.

Optionally, when the "preamble fixed-length" field indicates that the duration (the quantity of symbols) occupied by the "preamble DCI" field is not zero, the second node performs blind detection on the "preamble DCI" field in the preamble information.

Optionally, the second node further determines, based on the preamble information, a channel occupancy time of the communication domain. For example, the second node determines, based on the preamble information, the first COT or the second COT shown in FIG. 3A.

In a possible implementation, that the second node performs blind detection on the "preamble DCI" field includes the following cases.

**Case 1: There are upper limits on durations occupied by the "preamble common DCI" field and the "preamble dedicated DCI" field.**

For example, the "preamble common DCI" field occupies a maximum of 12 symbols, and the "preamble dedicated DCI" field occupies a maximum of 64 symbols.

In this case, if the second node cannot blindly detect the "preamble dedicated DCI" field that belongs to the second node from the symbols occupied by the "preamble dedicated DCI" field, the second node may choose to perform blind detection on the symbols occupied by the "preamble common DCI" field, to determine whether the "preamble dedicated DCI" field that belongs to the second node exists in the symbols occupied by the "preamble common DCI" field.

**Case 2: There is no upper limit for the durations occupied by the "preamble common DCI" field and the "preamble dedicated DCI" field.**

For example, the duration occupied by the "preamble common DCI" field may be indicated by using the third indication information, and the duration occupied by the "preamble dedicated DCI" field may be indicated by using the target indication information, or the duration occupied by the "preamble dedicated DCI" field may be determined based on the second indication information and the third indication information.

In this case, the durations occupied by the "preamble common DCI" field and the "preamble dedicated DCI" field are not limited. For example, the quantities of symbols occupied by the "preamble common DCI" field and the "preamble dedicated DCI" field are sequentially 16 symbols and 32 symbols, or 8 symbols and 64 symbols.

The durations occupied by the "preamble common DCI" field and the "preamble dedicated DCI" field are flexibly set. The durations occupied by the "preamble common DCI" field and the "preamble dedicated DCI" field may be flexibly set based on a requirement for sending the "preamble common DCI" field and/or the "preamble dedicated DCI" field, so that the second node can accurately obtain, through parsing, information carried in the "preamble common DCI" field and/or the "preamble dedicated DCI" field.

Further, the second node may blindly detect the "T-node-specific control information resource pool" corresponding to the preamble DCI. The following describes several possible implementation examples.

Implementation example 1: When the structure of the "T-node-specific control information resource pool" corresponding to the preamble DCI is the foregoing "structure 1", the second node ignores (ignore) information such as [controlTimeResource], [superframePeriod], [superframeOffset], and [overHeadIndicationPeriod] in the structure 1. The second node determines, based on [preambleControlTimeResource] in the "structure 1", a start location and a length of the preamble DCI corresponding to the second node. In addition, a location and a comb for feeding back an ACK/NACK by the second node are determined based on [dedicatedACK-ResourceSetConf] and [dedicatedACK-ResourceCombConf] in the "structure 1".

Implementation example 2: When the structure of the "T-node-specific control information resource pool" corresponding to the preamble DCI is the foregoing "structure 2", the second node directly determines, based on [preambleControlTimeResource] in the "structure 2", a start location and a length of the preamble DCI corresponding to the second node. In addition, a location and a comb for feeding back an ACK/NACK by the second node are determined based on [dedicatedACK-ResourceSetConf] and [dedicatedACK-ResourceCombConf] in the "structure 2".

Implementation example 3: When the "T-node-specific control information resource pool" corresponding to the preamble DCI does not include [superframePeriod] and [superframeOffset], or the second node ignores [superframePeriod] and [superframeOffset], [superframePeriod] is 0 by default, and [superframeOffset] is 0 by default.

In some possible implementations, when a superframe number satisfies mod(superframe number, superframePeriod+1)=superframeOffset (the superframe number starts from 0 by default, that is, a start superframe number is 0), the "T-node-specific control information resource pool" information corresponding to the preamble DCI indicates the second node to blindly detect, in the superframe, a control information resource pool and an "ACK resource pool" paired with the resource pool. For example, when both superframePeriod and superframeOffset are 0, each superframe number satisfies the foregoing condition. Therefore, the second node needs to blindly detect, in each superframe number, a control information resource pool and an "ACK resource pool" paired with the resource pool. For another example, when superframePeriod is 4 and superframeOffset is 0, five superframes are used as one group, and the 1^{st} superframe in each group satisfies the foregoing condition (for example, a superframe number is 0, 5, or 10). Therefore, when a superframe number is 0, 5, or 10, the second node needs to blindly detect a control information resource pool and an "ACK resource pool" paired with the resource pool.

In still other possible implementations, when the superframe number does not satisfy mod(superframe number, superframePeriod+1)=superframeOffset, the second node reuses a control information resource and an "ACK resource pool" paired with the resource pool that are blindly detected last time. For example, when superframePeriod is 4 and superframeOffset is 0, if the superframe numbers are 1, 2, 3, and 4, a control information resource and an "ACK resource pool" paired with the resource pool that are blindly detected by the second node when the superframe number is 0 are reused. When the superframe numbers are 6, 7, 8, and 9, a control information resource pool and an "ACK resource pool" paired with the resource pool that are blindly detected by the second node when the superframe number is 5 are reused.

Optionally, for example, arrangement of the superframe numbers starts from 0. In each overHeadIndicationPeriod, the control information resource and the "ACK resource pool" paired with the resource pool do not change. For example, when the overHeadIndicationPeriod is 5, the control information resource carried in the DCI and the "ACK resource pool" paired with the resource pool are indicated, to indicate resource scheduling in the next five superframes. For example, when the overHeadIndicationPeriod in the preamble DCI is 5, for superframes whose superframe numbers are 0, 1, 2, 3, and 4, a control information resource pool carried in the preamble DCI and an "ACK resource pool" paired with the resource pool are used to perform transmission resource scheduling.

Optionally, when the "preamble dedicated DCI" field does not carry the "T-node-specific control information resource pool" of the second node, the second node feeds back ACK/NACK information by using "common control information resource pool detection control information" carried in the "preamble common DCI" field and the first ACK resource pool in an "ACK resource pool" set.

In this embodiment of this application, the "preamble DCI" field is added to the preamble information, so that after receiving the preamble information, the second node may schedule the transmission resource of the superframe based on scheduling information indicated by the "preamble DCI" field, thereby avoiding a case in which the transmission resource of the superframe cannot be scheduled in a timely manner, and fully using the transmission resource of the superframe. Because the transmission resource of the superframe is scheduled in a timely manner, to-be-transmitted data can be transmitted in a timely manner, thereby reducing a data transmission delay.

In a possible implementation, whether the control information resource pool carried in the "preamble DCI" field and the "ACK resource pool" paired with the resource pool are used to schedule a transmission resource may be selected based on a scheduling manner. Scheduling manners may be classified into "cross-superframe scheduling" and "co-superframe scheduling".

The "cross-superframe scheduling" may be a scheduling manner in which DCI and uplink and downlink are not in a same superframe, or a scheduling manner in which DCI is not in any superframe scheduled by the DCI (the DCI may schedule transmission resources of a plurality of superframes, which is indicated by the foregoing [overHeadIndicationPeriod]).

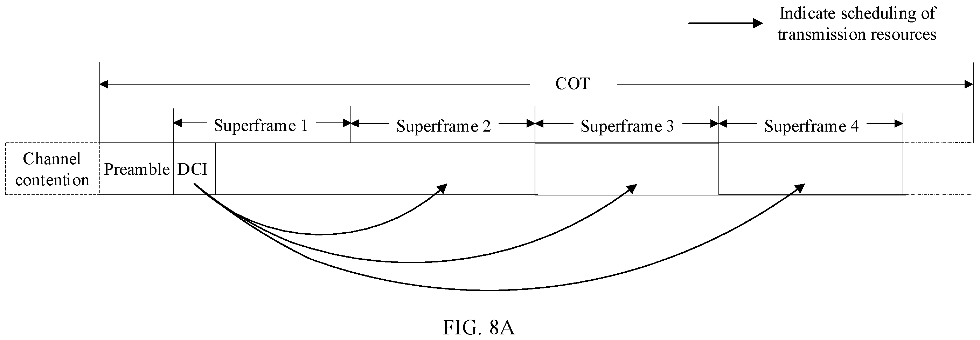

FIG. 8A is a diagram of a first type of cross-superframe scheduling according to an embodiment of this application. As shown in FIG. 8A, a superframe 1, a superframe 2, a superframe 3, and a superframe 4 are located in one COT, and a scheduling manner in which DCI in the superframe 1 indicates scheduling of transmission resources of the superframe 2, the superframe 3, and the superframe 4 is referred to as "cross-superframe scheduling". Optionally, a scheduling manner in which the DCI in the superframe 1 indicates scheduling of a transmission resource of the superframe 2 is also referred to as "cross-superframe scheduling". It should be understood that the DCI in the superframe 1 cannot indicate scheduling of a transmission resource of the superframe 1.

Optionally, FIG. 8A is used as an example. The DCI in the superframe 1 may be referred to as ninth indication information, scheduling information included in the DCI may be referred to as third scheduling information, the superframe 1 may be referred to as a first time unit, and the superframe 2, the superframe 3, and the superframe 4 may be referred to as second time units.

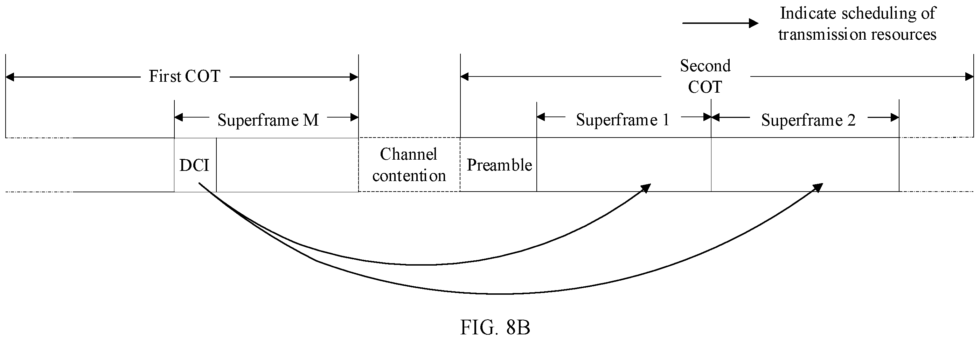

FIG. 8B is a diagram of a second type of cross-superframe scheduling according to an embodiment of this application. As shown in FIG. 8B, a superframe M is located in a first COT, a superframe 1 and a superframe 2 are located in a second COT, and a scheduling manner in which DCI in the superframe M indicates scheduling of transmission resources of the superframe 1 and the superframe 2 is also referred to as "cross-superframe scheduling". Optionally, a scheduling manner in which the DCI in the superframe M indicates scheduling of a transmission resource of the superframe 1 is also referred to as "cross-superframe scheduling". It should be understood that the DCI in the superframe M cannot indicate scheduling of a transmission resource of the superframe M.

Optionally, the first COT before the second COT includes the superframe M, and the DCI included in the superframe M is used for scheduling the transmission resources corresponding to the superframe 1 and the superframe 2. The DCI included in the superframe M may be referred to as sixth indication information, scheduling information included in the DCI is referred to as second scheduling information, and the superframe 1 and the superframe 2 are referred to as first time units.

The "co-superframe scheduling" may be a scheduling manner in which DCI and uplink and downlink are within a same superframe, or a scheduling manner in which the DCI is within any superframe scheduled by using the DCI.

FIG. 9A is a diagram of a first type of co-superframe scheduling according to an embodiment of this application. As shown in FIG. 9A, a superframe 1 and a superframe 2 are located in one COT. A scheduling manner in which DCI in the superframe 1 indicates scheduling of a transmission resource of the superframe 1, and DCI in the superframe 2 indicates scheduling of a transmission resource of the superframe 2 is referred to as "co-superframe scheduling".

FIG. 9B is a diagram of a second type of co-superframe scheduling according to an embodiment of this application. As shown in FIG. 9B, a superframe 1 and a superframe 2 are located in one COT. A scheduling manner in which DCI in the superframe 1 indicates scheduling of transmission resources of the superframe 1 and the superframe 2 is also referred to as "co-superframe scheduling".

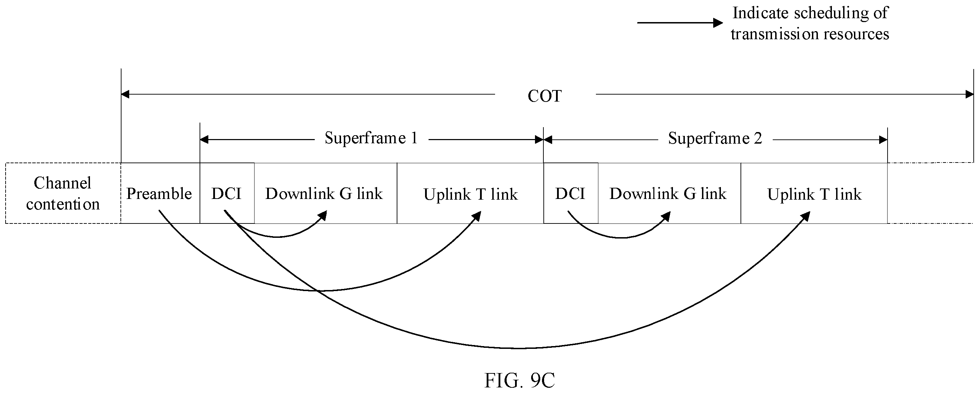

FIG. 9C is a diagram of a third type of co-superframe scheduling according to an embodiment of this application. As shown in FIG. 9C, a superframe 1 and a superframe 2 are located in one COT, DCI in the superframe 1 includes scheduling information that indicates scheduling of a downlink G link of the superframe 1, and the scheduling information is used for scheduling the downlink G link of the superframe 1. A scheduling manner in which a superframe includes scheduling information used for scheduling a downlink G link of the superframe may be referred to as "downlink G link co-superframe scheduling" or "uplink T link cross-superframe scheduling".

Optionally, FIG. 9C is used as an example. The DCI in the superframe 1 may be referred to as eighth indication information, the downlink G link scheduling information included in the DCI may be referred to as third downlink scheduling information, and the superframe 1 may be referred to as a first time unit.

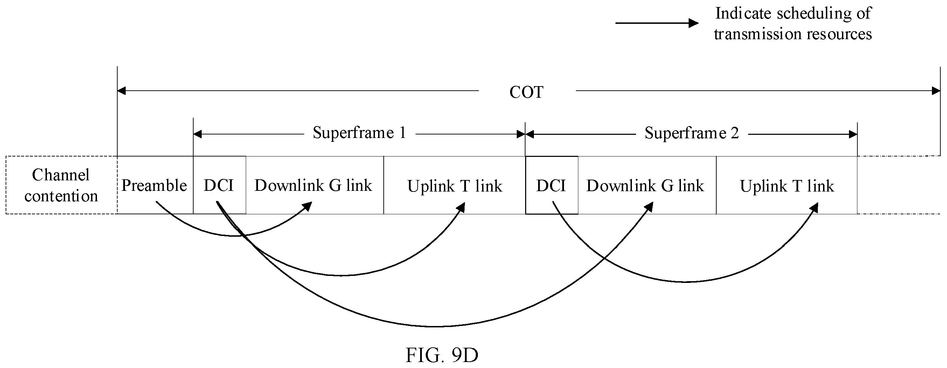

FIG. 9D is a diagram of a fourth type of co-superframe scheduling according to an embodiment of this application. As shown in FIG. 9D, a superframe 1 and a superframe 2 are located in one COT, DCI in the superframe 1 includes scheduling information that indicates scheduling of an uplink T link of the superframe 1, and the scheduling information is used for scheduling the uplink T link of the superframe 1. A scheduling manner in which a superframe includes scheduling information used for scheduling an uplink T link of the superframe may be referred to as "uplink T link co-superframe scheduling" or "downlink G link cross-superframe scheduling".

Optionally, FIG. 9D is used as an example. The DCI in the superframe 1 may be referred to as seventh indication information, the uplink T link scheduling information included in the DCI may be referred to as third uplink scheduling information, and the superframe 1 may be referred to as a first time unit.

Based on different scheduling manners, whether to use the control information resource pool carried in the "preamble DCI" field and the "ACK resource pool" paired with the resource pool to schedule a transmission resource includes the following cases.

### Case 1: The manner of scheduling a resource by using DCI is "cross-superframe scheduling".

In this case, the second node schedules a transmission resource based on the control information resource pool carried in the "preamble DCI" field and the "ACK resource pool" paired with the resource pool. FIG. 8B is used as an example. The second node ignores the DCI in the superframe M, and schedules transmission resources for the superframe 1 and the superframe 2 based on the control information resource pool carried in the "preamble DCI" field and the "ACK resource pool" paired with the resource pool.

Optionally, with reference to FIG. 8B, when the first COT includes the sixth indication information, and the preamble received by the second node is the preamble information shown in FIG. 7, the second node ignores the sixth indication information, and schedules a transmission resource based on the "preamble DCI" field in the preamble.

### Case 2: The manner of scheduling a resource by using DCI is "co-superframe scheduling".

In this case, the second node schedules a transmission resource based on a control information resource pool carried by DCI in a superframe and an "ACK resource pool" paired with the resource pool. FIG. 9A is used as an example. The second node ignores the "preamble DCI" field, and schedules transmission resources for the downlink G link and the uplink T link in the superframe 1 based on the DCI field in the superframe 1. Alternatively, FIG. 9B is used as an example. The second node ignores the "preamble DCI" field, and schedules transmission resources for the downlink G links and the uplink T links in the superframe 1 and the superframe 2 based on the DCI field in the superframe 1.

### Case 3: The manner of scheduling a resource by using DCI is "downlink G link co-superframe scheduling".

In this case, the second node schedules a transmission resource for an uplink T link in a superframe based on a "preamble DCI" field, and schedules a transmission resource for a downlink G link in the superframe based on a control information resource pool carried by DCI in the superframe and an "ACK resource pool" paired with the resource pool. FIG. 9C is used as an example. The second node schedules a transmission resource for the uplink T link in the superframe 1 based on the "preamble DCI" field, and schedules a transmission resource for the downlink G link in the superframe 1 based on the DCI in the superframe 1. It may be understood as that a corresponding transmission resource in the superframe 1 is scheduled based on the DCI in the superframe 1, and the transmission resource is used for the downlink G link in the superframe 1.

Optionally, with reference to FIG. 9C, when the first time unit (the superframe 1) includes the eighth indication information, and the preamble received by the second node is the preamble information shown in FIG. 7, the second node ignores indication information that is in the preamble information and that is used for scheduling a downlink, and schedules a transmission resource for the downlink G link in the first time unit based on the third downlink scheduling information included in the eighth indication information.

### Case 4: The manner of scheduling a resource by using DCI is "uplink T link co-superframe scheduling".

In this case, the second node schedules a transmission resource for a downlink G link in a superframe based on a "preamble DCI" field, and schedules a transmission resource for an uplink T link in the superframe based on a control information resource pool carried by DCI in the superframe and an "ACK resource pool" paired with the resource pool. FIG. 9D is used as an example. The second node schedules a transmission resource for the downlink G link in the superframe 1 based on the "preamble DCI" field, and schedules a transmission resource for the uplink T link in the superframe 1 based on the DCI in the superframe 1 (which may be understood as scheduling a corresponding transmission resource in the superframe 1 based on the DCI in the superframe 1, and using the transmission resource for the uplink T link in the superframe 1).

Optionally, with reference to FIG. 9D, when the first time unit (the superframe 1) includes the seventh indication information, and the preamble received by the second node is the preamble information shown in FIG. 7, the second node ignores indication information that is in the preamble information and that is used for scheduling an uplink, and schedules a transmission resource for the uplink T link in the first time unit based on the third uplink scheduling information included in the seventh indication information.

**Step S603: The first node and the second node communicate data in the first time unit.**

It should be noted that, unless otherwise specified below, a used LBT frame structure is the frame structure shown in FIG. 7, and the preamble information (or referred to as a preamble) includes the first indication information.

It is learned that a resource scheduling process includes a plurality of scheduling manners. The following describes, in different cases, how the first node and the second node communicate data in the first time unit based on the first scheduling information.

### Case 1: Cross-superframe scheduling, for example, the scheduling manner shown in FIG. 8B

In a possible implementation, the transmission resource corresponding to the first time unit is scheduled based on the uplink T link scheduling information and the downlink G link scheduling information in the first scheduling information. The first node and the second node communicate data on the transmission resource.

For example, with reference to FIG. 8B, the second node not only receives the first scheduling information included in the preamble, but also receives the DCI included in the superframe M in a previous COT (the first COT). The second node ignores the DCI included in the superframe M, and schedules, based on the first scheduling information included in the preamble information, a transmission resource corresponding to the first time unit. The first node and the second node communicate data on the transmission resource.

For example, with reference to FIG. 5B, the preamble received by the second node is the preamble included in the second COT, and the first superframe in a previous COT (the first COT) does not include DCI used for scheduling the second superframe. Similarly, the transmission resource corresponding to the first time unit may be scheduled based on the first scheduling information included in the preamble. The first node and the second node communicate data on the transmission resource.

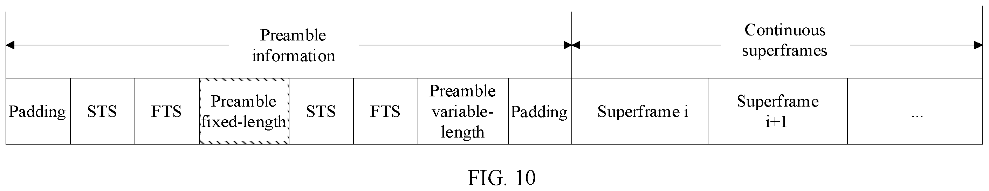

Optionally, if the LBT frame structure in FIG. 5B is the frame structure shown in FIG. 10, because no DCI is used for scheduling the transmission resource corresponding to the second superframe, a waste of the transmission resource corresponding to the second superframe is caused, and in addition, to-be-sent data cannot be sent in a timely manner, resulting in a relatively high transmission delay of the to-be-sent data.

FIG. 10 shows a second LBT frame structure according to an implementation of this application. As shown in FIG. 10, FIG. 10 includes preamble information and continuous superframes. The preamble information includes a "padding" field, an "STS" field, an "FTS" field, a "preamble fixed-length" field, a "preamble variable-length" field, and the like. For descriptions of the foregoing fields, refer to corresponding descriptions in FIG. 7. Details are not described herein again.

Optionally, the first node and the second node further schedule, based on scheduling information included in the DCI in the first time unit, the transmission resource corresponding to the second time unit, and the first node and the second node communicate data on the transmission resource.

It may be understood that when the resource scheduling manner is "cross-superframe scheduling", the second node may schedule, based on the "preamble DCI" field in the preamble information, the transmission resource corresponding to the first time unit, to avoid a case in which the transmission resource corresponding to the first time unit cannot be scheduled because the resource scheduling indication information is not received. This can further reduce a transmission delay of to-be-communicated data between the first node and the second node without wasting transmission resources. In addition, because the "preamble DCI" field in the preamble is used for scheduling the transmission resource, the second node uses new scheduling information to schedule the transmission resource, so that the transmission resource corresponding to the first time unit is more properly used.

### Case 2: Co-superframe scheduling

In this case, the first node and the second node ignore the first scheduling information included in the preamble. The first node and the second node communicate data (including uplink and downlink data transmission) on a transmission resource scheduled by using the DCI based on the DCI in the first time unit. For scheduling the transmission resource corresponding to the first time unit based on the DCI in the first time unit, refer to the corresponding descriptions in FIG. 9A and FIG. 9B.

### Case 3: Downlink G link co-superframe scheduling

In this case, the first node and the second node ignore the downlink G link scheduling information included in the first scheduling information in the preamble. The first node and the second node schedule the transmission resource corresponding to the first time unit based on the uplink T link scheduling information in the first scheduling information and the downlink G link scheduling information included in the DCI in the first time unit, and communicate data on the transmission resource. For scheduling the transmission resource corresponding to the first time unit based on the uplink T link scheduling information in the first scheduling information and the downlink G link scheduling information included in the DCI in the first time unit, refer to corresponding descriptions in FIG. 9C.

Optionally, the first node and the second node further schedule the transmission resource corresponding to the second time unit based on the uplink T link scheduling information included in the DCI in the first time unit, and the first node and the second node perform uplink data transmission on the transmission resource. The second time unit is a time unit after the first time unit. FIG. 3B is used as an example. When the first time unit is the first COT, the second time unit may be the second COT.

### Case 4: Uplink G link co-superframe scheduling

In this case, the first node and the second node ignore the uplink T link scheduling information included in the first scheduling information in the preamble. The first node and the second node schedule the transmission resource corresponding to the first time unit based on the downlink G link scheduling information in the first scheduling information and the uplink T link scheduling information included in the DCI in the first time unit, and communicate data on the transmission resource. For scheduling the transmission resource corresponding to the first time unit based on the uplink T link scheduling information in the first scheduling information and the downlink G link scheduling information included in the DCI in the first time unit, refer to corresponding descriptions in FIG. 9D.

Optionally, the first node and the second node further schedule the transmission resource corresponding to the second time unit based on the downlink G link scheduling information included in the DCI in the first time unit, and the first node and the second node perform downlink data transmission on the transmission resource. The second time unit is a time unit after the first time unit. FIG. 3B is used as an example. When the first time unit is the first COT, the second time unit may be the second COT.

The foregoing co-superframe scheduling can enable the second node to schedule the transmission resource corresponding to the first time unit based on latest scheduling information, so that the transmission resource corresponding to the first time unit can be properly used.

In conclusion, the preamble information including the preamble DCI is sent to the second node, and the second node may schedule a transmission resource based on the preamble DCI, so that after receiving the preamble information, the second node can complete synchronization with the first node based on the preamble information, schedule the first transmission resource in the first time unit, and perform data transmission in the first time unit. In this way, to-be-sent data can be sent in a timely manner by using the first time unit, thereby reducing a transmission delay of the to-be-sent data.

In addition, because the transmission resource in the first time unit is scheduled in a timely manner, a case in which a transmission resource is wasted because the transmission resource cannot be scheduled in a timely manner can be avoided.

**The following describes an apparatus for implementing the foregoing data transmission method.**

It should be understood that in the apparatus provided in embodiments of this application, division into units is merely logical function division. During actual implementation, all or some of the units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a central processing unit (Central Processing Unit, CPU) or a microprocessor. The memory is a memory inside the apparatus or a memory outside the apparatus. Alternatively, the units in the apparatus may be implemented in a form of hardware circuits, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between logic gate circuits, to implement functions of some or all of the foregoing units. All the units of the apparatus may be implemented in the form of software invoked by the processor, or may be implemented in the form of hardware circuit, or some of the units are implemented in the form of software invoked by the processor, and remaining units are implemented in the form of hardware circuit.

It may be learned that each unit of the following apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated together and implemented in a form of a system-on-a-chip. The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

The following lists two possible apparatuses.

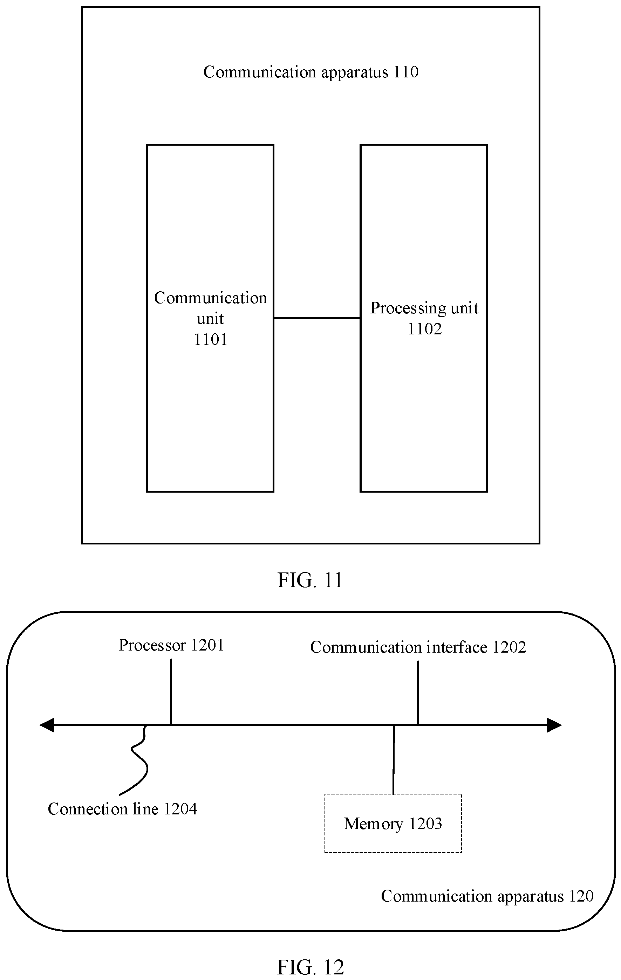

FIG. 11 is a diagram of a structure of a communication apparatus according to an embodiment of this application. The communication apparatus 110 includes a communication unit 1101 and a processing unit 1102. The communication unit 1101 may be configured to participate in a signal transmission process, including but not limited to signal generation, modulation, transmission, and the like. The processing unit 1102 may be configured to perform operations such as determining, calculation, generation, and detection, and/or configured to support another process in the foregoing embodiments.

Optionally, the communication apparatus 110 may be an independent device, or may be a component included in an independent device (for example, the first node 401), for example, a chip, a software module, or an integrated circuit. The communication apparatus 110 is configured to implement the foregoing communication method, for example, the communication method shown in FIG. 6.

In a possible implementation, the communication apparatus 110 sends preamble information, where the preamble information indicates a first node and a second node to be synchronized. The preamble information and a first time unit are within a first COT, and the first time unit is used for communicating data between the first node and the second node. The preamble information includes first indication information, the first indication information includes first scheduling information, and the first scheduling information is used for scheduling a first transmission resource corresponding to the first time unit. The communication apparatus 110 communicates data in the first time unit based on the first scheduling information.

In another possible implementation, the communication apparatus 110 receives preamble information, where the preamble information indicates a first node and a second node to be synchronized. The preamble information and a first time unit are within a first COT, and the first time unit is used for communicating data between the first node and the second node. The preamble information includes first indication information, the first indication information includes first scheduling information, and the first scheduling information is used for scheduling a first transmission resource corresponding to the first time unit. The communication apparatus 110 communicates data in the first time unit based on the first scheduling information.

The communication unit 1101 is configured to send the preamble information. The preamble information indicates the first node and the second node to be synchronized. The preamble information and the first time unit are within the first channel occupancy time COT, the first time unit is used for communicating data between the first node and the second node, the preamble information includes first indication information, the first indication information includes first scheduling information, and the first scheduling information is used for scheduling the first transmission resource corresponding to the first time unit.

The processing unit 1102 is configured to communicate data in the first time unit based on the first scheduling information.

Optionally, the preamble information further includes second indication information, and the second indication information indicates a duration occupied by the first indication information.

Optionally, a value corresponding to the second indication information is a first value, the first value is different from a preset value, and the preset value is used to represent that the preamble information does not include the first indication information.

Optionally, the preset value may be any value. This is not limited in this implementation of this application. For example, the preset value may be 127, 126, 1, or the like.

Optionally, a size of the second indication information is 7 bits.

Optionally, the size of the second indication information may alternatively be 1 bit, 2 bits, 4 bits, 8 bits, 10 bits, or the like. The size of the second indication information is not limited in this implementation of this application.

Optionally, the first indication information includes first common DCI and/or first dedicated DCI.

Optionally, the preamble information further includes third indication information, the third indication information indicates a duration occupied by the first common DCI, and a duration occupied by the first dedicated DCI is associated with the duration occupied by the first common DCI.

Optionally, the third indication information may be adjusted to indicate the duration occupied by the first dedicated DCI, and the duration occupied by the first common DCI may be determined based on the duration occupied by the first indication information and the duration occupied by the first dedicated DCI.

Optionally, the preamble information may further include one piece of target indication information, and the target indication information directly indicates the duration occupied by the first dedicated DCI.

Optionally, the first dedicated DCI includes fourth indication information, and the fourth indication information indicates a transmission resource that is used to carry an acknowledgment character ACK/negative acknowledgment NACK in the first time unit.

The ACK indicates that the second node correctly receives data from the first node, and the NACK indicates that the second node incorrectly receives data from the first node.

Optionally, a "dedicatedACK-ResourceSetConf" field may be used in a "T-node-specific control information resource pool" to indicate a transmission resource for feeding back the ACK/NACK based on a first indication.

Optionally, the first dedicated DCI further includes fifth indication information, and the fifth indication information indicates a start location of the first indication information in the preamble information.

Optionally, the fifth indication information further indicates a duration occupied by the preamble DCI.

Optionally, a "preambleControlTimeResource" field may be added to the "T-node-specific control information resource pool", to indicate the start location of the first indication information in the preamble information.

Optionally, a size of the fifth indication information is 5 bits, and the start location of the first indication information in the preamble information is twice a value of the fifth indication information.

Optionally, a second COT preceding the first COT includes sixth indication information, the sixth indication information includes second scheduling information, and the second scheduling information is used for scheduling a second transmission resource corresponding to the first time unit.

Optionally, the first time unit includes seventh indication information, the seventh indication information includes third uplink scheduling information, and the third uplink scheduling information is used for scheduling a transmission resource corresponding to the first time unit.

The processing unit is specifically configured to communicate uplink data in the first time unit based on the third uplink scheduling information.

Optionally, the first time unit includes eighth indication information, the eighth indication information includes third downlink scheduling information, and the third downlink scheduling information is used for scheduling a transmission resource corresponding to the first time unit.

The processing unit is specifically configured to communicate downlink data in the first time unit based on the third downlink scheduling information.

Optionally, when both the seventh indication information and the eighth indication information are included in the first time unit,
the processing unit is specifically configured to communicate uplink data in the first time unit based on the third uplink scheduling information; and communicate downlink data in the first time unit based on the third downlink scheduling information.

Optionally, the first time unit includes ninth indication information, the ninth indication information includes third scheduling information, the third scheduling information is used for scheduling a transmission resource corresponding to the second time unit, and the first time unit and the second time unit are within the first COT.

Optionally, the ninth indication information includes second common DCI and second dedicated DCI, the second dedicated DCI includes tenth indication information, and the tenth indication information indicates a start location of the second dedicated DCI in the first time unit.

Optionally, the second dedicated DCI further includes eleventh indication information, the eleventh indication information indicates a periodicity at which some messages appear, and a basic time unit of the periodicity is a superframe (1 ms). For example, a periodicity at which DCI appears is five superframes, that is, the DCI appears once every five superframes (ms).

Optionally, a "superframePeriod" field may be used in the "T-node-specific control information resource pool", to indicate a periodicity at which some messages appear, and a basic time unit of the periodicity is a superframe (1 ms).

Optionally, the second dedicated DCI further includes twelfth indication information, and the twelfth indication information indicates an offset of some information in a periodicity. For example, the periodicity at which the DCI appears is 5 ms, and the twelfth indication information may indicate that the DCI is at the X^{th} ms of the periodicity. For example, the twelfth indication information may indicate that the DCI is at the 3^{rd} ms of the periodicity.

Optionally, a "superframeOffset" field may be used in the "T-node-specific control information resource pool".

Optionally, the second dedicated DCI further includes thirteenth indication information, and the thirteenth indication information indicates a transmission resource used to carry an ACK/NACK in the second time unit.

Optionally, a "dedicatedACK-ResourceSetConf" field may be used in the "T-node-specific control information resource pool", to indicate the transmission resource used to carry the ACK/NACK in the second time unit.

Optionally, the second dedicated DCI further includes fourteenth indication information, and the fourteenth indication information indicates information about a resource used for ACK feedback in an ACK resource pool.

Optionally, a "dedicatedACK-ResourceCombConf" field may be used in the "T-node-specific control information resource pool", to indicate the information about the resource used for ACK feedback in the ACK resource pool.

Optionally, the preamble information includes a first protection field, a first synchronization field, a preamble fixed-length field, a second synchronization field, the first indication information, a preamble variable-length field, and a second protection field.

A start location of the first protection field is located at a start location of the preamble information, the first synchronization field is located after the first protection field, and the preamble fixed-length field is located after the first synchronization field.

The second synchronization field, the first indication information, the preamble variable-length field, and the second protection field are included after the preamble fixed-length field, where the first indication information is located before the second protection field, and an end location of the second protection field is located at an end location of the preamble information.

FIG. 12 is a diagram of a structure of another possible communication apparatus 120 according to an embodiment of this application. The communication apparatus 120 may include at least one processor 1201 and a communication interface 1202. Optionally, at least one memory 1203 may be further included. Further, optionally, a connection line 1204 may be further included. The processor 1201, the communication interface 1202, and/or the memory 1203 are connected through the connection line 1204, and communicate with each other through the connection line 1204 to transfer a control signal and/or a data signal. Optionally, the communication apparatus 120 may be an independent device, for example, an ECU or a telematics box (T-box), or may be a component included in an independent device, for example, a chip, a software module, or an integrated circuit.

Specifically:
(1) The processor 1201 is a module for performing an arithmetic operation and/or a logical operation, and may specifically include one or more of the following apparatuses: a CPU, an MCU, a GPU, an MPU, an ASIC, an FPGA, a CPLD, a coprocessor (assisting the central processing unit in completing corresponding processing and application), an NPU, and/or the like.
(2) The communication interface 1202 may be configured to provide an information input or output for the at least one processor. In some possible scenarios, the communication interface 1202 may include an interface circuit, and/or the communication interface 1202 may be configured to receive data sent from the outside and/or send data to the outside. For example, the communication interface 1202 may be a wired link interface including an Ethernet cable and the like, or may be a wireless link (Wi-Fi, Bluetooth, universal wireless transmission, an onboard short-range communication technology, another short-range wireless communication technology, or the like) interface. Optionally, the communication interface 1202 may further include a transmitter (for example, a radio frequency transmitter or an antenna), a receiver, or the like coupled to the interface.

Optionally, if the communication apparatus 120 is an independent device, the communication interface 1202 may include a receiver and a transmitter. The receiver and the transmitter may be a same component or different components. When the receiver and the transmitter are a same component, the component may be referred to as a transceiver.

Optionally, if the communication apparatus 120 is a chip or a circuit, the communication interface 1202 may include an input interface and an output interface. The input interface and the output interface may be a same interface or different interfaces.

Optionally, a function of the communication interface 1202 may be implemented through a transceiver circuit or a dedicated transceiver chip. The processor 1201 may be implemented by a dedicated processing chip, a processing circuit, a processor, or a general-purpose chip.

(3) The memory 1203 is configured to provide storage space, and the storage space may store data such as an operating system and a computer program. The memory 1203 may be one or a combination of more of a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like.

Functions and actions of modules or units in the communication apparatus 120 listed above are merely examples for description.

Functional units in the communication apparatus 120 may be configured to implement the foregoing data transmission method. Herein, detailed descriptions are omitted to avoid repetition.

Optionally, the processor 1201 may be a processor (referred to as a dedicated processor for ease of differentiation) that is specially configured to perform the foregoing method, or may be a processor (referred to as a dedicated processor for ease of differentiation) that invokes a computer program to perform the foregoing method. Optionally, the at least one processor may further include both a dedicated processor and a general-purpose processor.

Optionally, when the compute device includes the at least one memory 1203, if the processor 1201 invokes a computer program to implement the foregoing data transmission method, the computer program may be stored in the memory 1203.

An embodiment of this application further provides a chip system. The chip system includes a processor and a communication interface. The communication interface is configured to receive and/or send data, and/or the communication interface is configured to provide an input and/or an output for the processor. The chip system is configured to implement the foregoing data transmission method, for example, the communication method shown in FIG. 6.

An embodiment of this application further provides a terminal. The terminal includes the foregoing communication apparatus, for example, includes one or more of the following: the communication apparatus 110 or the communication apparatus 120.

In a possible implementation, the terminal may be an intelligent terminal or a transportation means such as a vehicle, an uncrewed aerial vehicle, or a robot.

An embodiment of this application further provides a data transmission system, including at least one communication apparatus, for example, including at least one communication apparatus 110, or at least one communication apparatus 120, or a communication apparatus 110 and a communication apparatus 120.

An embodiment of this application further provides a computer-readable storage medium. The computer-readable storage medium stores instructions. When the instructions are run on at least one processor, the foregoing data transmission method, for example, the communication method in FIG. 6, is implemented.

An embodiment of this application further provides a computer program product. The computer program product includes computer instructions, and when the computer instructions are executed by a compute device, the foregoing data transmission method, for example, the communication method in FIG. 6, is implemented.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

## Claims

1. A communication method, wherein the method comprises:
sending preamble information, wherein the preamble information indicates a first node and a second node to be synchronized; wherein
the preamble information and a first time unit are within a first channel occupancy time COT, and the first time unit is used for communicating data between the first node and the second node; and
the preamble information comprises first indication information, the first indication information comprises first scheduling information, and the first scheduling information is used for scheduling a first transmission resource corresponding to the first time unit; and
communicating data in the first time unit based on the first scheduling information.

2. The method according to claim 1, wherein the preamble information further comprises second indication information, and the second indication information indicates a duration occupied by the first indication information.

3. The method according to claim 2, wherein a value corresponding to the second indication information is a first value, the first value is different from a preset value, and the preset value is used to represent that the preamble information does not comprise the first indication information.

4. The method according to claim 2 or 3, wherein a size of the second indication information is 7 bits.

5. The method according to any one of claims 1 to 4, wherein the first indication information comprises first common downlink control information DCI and/or first dedicated DCI.

6. The method according to claim 5, wherein the preamble information further comprises third indication information, the third indication information indicates a duration occupied by the first common DCI, and a duration occupied by the first dedicated DCI is associated with the duration occupied by the first common DCI.

7. The method according to claim 5 or 6, wherein the first dedicated DCI comprises fourth indication information, and the fourth indication information indicates a transmission resource used to carry an acknowledgment character ACK/negative acknowledgment NACK in the first time unit; wherein
the ACK indicates that the second node correctly receives data from the first node, and the NACK indicates that the second node incorrectly receives data from the first node.

8. The method according to any one of claims 5 to 7, wherein the first dedicated DCI further comprises fifth indication information, and the fifth indication information indicates a start location of the first indication information in the preamble information.

9. The method according to claim 8, wherein a size of the fifth indication information is 5 bits, and the start location of the first indication information in the preamble information is twice a value of the fifth indication information.

10. The method according to any one of claims 1 to 9, wherein a second COT preceding the first COT comprises sixth indication information, the sixth indication information comprises second scheduling information, and the second scheduling information is used for scheduling a second transmission resource corresponding to the first time unit.

11. The method according to any one of claims 1 to 10, wherein seventh indication information is comprised in the first time unit, the seventh indication information comprises third uplink scheduling information, and the third uplink scheduling information is used for scheduling a transmission resource corresponding to the first time unit; and
communicating the data in the first time unit based on the first scheduling information comprises:
communicating uplink data in the first time unit based on the third uplink scheduling information.

12. The method according to any one of claims 1 to 11, wherein eighth indication information is comprised in the first time unit, the eighth indication information comprises third downlink scheduling information, and the third downlink scheduling information is used for scheduling the transmission resource corresponding to the first time unit; and
communicating the data in the first time unit based on the first scheduling information comprises:
communicating downlink data in the first time unit based on the third downlink scheduling information.

13. The method according to any one of claims 1 to 10, wherein ninth indication information is comprised in the first time unit, the ninth indication information comprises third scheduling information, the third scheduling information is used for scheduling a transmission resource corresponding to the second time unit, and the first time unit and the second time unit are within the first COT.

14. The method according to claim 13, wherein the ninth indication information comprises second common DCI and second dedicated DCI; wherein
the second dedicated DCI comprises tenth indication information, and the tenth indication information indicates a start location of the second dedicated DCI in the first time unit.

15. The method according to claim 14, wherein the second dedicated DCI further comprises eleventh indication information, and the eleventh indication information indicates duration of the first time unit.

16. The method according to claim 14 or 15, wherein the second dedicated DCI further comprises twelfth indication information, and the twelfth indication information indicates an offset of the first time unit.

17. The method according to any one of claims 14 to 16, wherein the second dedicated DCI further comprises thirteenth indication information, and the thirteenth indication information indicates a transmission resource used to carry an ACK/NACK in the second time unit.

18. The method according to any one of claims 1 to 17, wherein the preamble information comprises a first protection field, a first synchronization field, a preamble fixed-length field, a second synchronization field, the first indication information, a preamble variable-length field, and a second protection field;
a start location of the first protection field is located at a start location of the preamble information, the first synchronization field is located after the first protection field, and the preamble fixed-length field is located after the first synchronization field; and
the second synchronization field, the first indication information, the preamble variable-length field, and the second protection field are comprised after the preamble fixed-length field, wherein the first indication information is located before the second protection field, and an end location of the second protection field is located at an end location of the preamble information.

19. A communication method, wherein the method comprises:
receiving preamble information, wherein the preamble information indicates a first node and a second node to be synchronized; wherein
the preamble information and a first time unit are within a first COT, and the first time unit is used for communicating data between the first node and the second node;
the preamble information comprises first indication information, the first indication information comprises first scheduling information, and the first scheduling information is used for scheduling a first transmission resource corresponding to the first time unit; and
communicating data in the first time unit based on the first scheduling information.

20. The method according to claim 19, wherein the preamble information further comprises second indication information, and the second indication information indicates a duration occupied by the first indication information.

21. The method according to claim 20, wherein a value corresponding to the second indication information is a first value, the first value is different from a preset value, and the preset value is used to represent that the preamble information does not comprise the first indication information;
the value of the second indication information is other than the preset value; or
when the value of the second indication information is the preset value, the second indication information indicates that the preamble information does not comprise the first indication information.

22. The method according to claim 20 or 21, wherein a size of the second indication information is 7 bits.

23. The method according to any one of claims 19 to 22, wherein the first indication information comprises first common DCI and/or first dedicated DCI.

24. The method according to claim 23, wherein the preamble information further comprises third indication information, the third indication information indicates a duration occupied by the first common DCI, and a duration occupied by the first dedicated DCI is associated with the duration occupied by the first common DCI.

25. The method according to claim 23 or 24, wherein the first dedicated DCI comprises fourth indication information, and the fourth indication information indicates a transmission resource used to carry an ACK/NACK in the first time unit; wherein
the ACK indicates that the second node correctly receives data from the first node, and the NACK indicates that the second node incorrectly receives data from the first node.

26. The method according to any one of claims 23 to 25, wherein the first dedicated DCI further comprises fifth indication information, and the fifth indication information indicates a start location of the first indication information in the preamble information.

27. The method according to claim 26, wherein a size of the fifth indication information is 5 bits, and the start location of the first indication information in the preamble information is twice a value of the fifth indication information.

28. The method according to any one of claims 19 to 27, wherein a second COT preceding the first COT comprises sixth indication information, the sixth indication information comprises second scheduling information, and the second scheduling information is used for scheduling a second transmission resource corresponding to the first time unit.

29. The method according to any one of claims 19 to 28, wherein seventh indication information is comprised in the first time unit, the seventh indication information comprises third uplink scheduling information, and the third uplink scheduling information is used for scheduling a transmission resource corresponding to the first time unit; and
communicating the data in the first time unit based on the first scheduling information comprises:
communicating uplink data in the first time unit based on the third uplink scheduling information.

30. The method according to any one of claims 19 to 29, wherein eighth indication information is comprised in the first time unit, the eighth indication information comprises third downlink scheduling information, and the third downlink scheduling information is used for scheduling the transmission resource corresponding to the first time unit; and
communicating the data in the first time unit based on the first scheduling information comprises:
communicating downlink data in the first time unit based on the third downlink scheduling information.

31. The method according to any one of claims 19 to 28, wherein ninth indication information is comprised in the first time unit, the ninth indication information comprises third scheduling information, the third scheduling information is used for scheduling a transmission resource corresponding to the second time unit, and the first time unit and the second time unit are within the first COT.

32. The method according to claim 31, wherein the ninth indication information comprises second common DCI and second dedicated DCI; wherein
the second dedicated DCI comprises tenth indication information, and the tenth indication information indicates a start location of the second dedicated DCI in the first time unit.

33. The method according to claim 32, wherein the second dedicated DCI further comprises eleventh indication information, and the eleventh indication information indicates duration of the first time unit.

34. The method according to claim 32 or 33, wherein the second dedicated DCI further comprises twelfth indication information, and the twelfth indication information indicates an offset of the first time unit.

35. The method according to any one of claims 32 to 34, wherein the second dedicated DCI further comprises thirteenth indication information, and the thirteenth indication information indicates a transmission resource used to carry an ACK/NACK in the second time unit.

36. The method according to any one of claims 19 to 35, wherein the preamble information comprises a first protection field, a first synchronization field, a preamble fixed-length field, a second synchronization field, the first indication information, a preamble variable-length field, and a second protection field;
a start location of the first protection field is located at a start location of the preamble information, the first synchronization field is located after the first protection field, and the preamble fixed-length field is located after the first synchronization field; and
the second synchronization field, the first indication information, the preamble variable-length field, and the second protection field are comprised after the preamble fixed-length field, wherein the first indication information is located before the second protection field, and an end location of the second protection field is located at an end location of the preamble information.

37. A communication apparatus, comprising a processor, wherein
when the processor invokes a computer program or instructions in a memory, the method according to any one of claims 1 to 18 is performed, or the method according to any one of claims 19 to 36 is performed.

38. A communication apparatus, comprising a logic circuit and a communication interface, wherein
the communication interface is configured to receive information or send information; and
the logic circuit is configured to receive information or send information through the communication interface, so that the method according to any one of claims 1 to 18 is performed, or the method according to any one of claims 19 to 36 is performed.

39. A terminal device, wherein the terminal device comprises a first node and/or a second node, wherein
the first node comprises an apparatus configured to implement the method according to any one of claims 1 to 18; and
the second node comprises an apparatus configured to implement the method according to any one of claims 19 to 36.

40. A computer-readable storage medium, comprising:
the computer-readable storage medium is configured to store instructions or a computer program; and when the instructions or the computer program is executed, the method according to any one of claims 1 to 18 is implemented, or the method according to any one of claims 19 to 36 is implemented.

41. A computer program product, comprising instructions or a computer program, wherein
when the instructions or the computer program is executed, the method according to any one of claims 1 to 18 is implemented, or the method according to any one of claims 19 to 36 is implemented.
